(19) Europäisches Patentamt
European Patent Office
Office européen des brevets

(11) **EP 4 640 385 A1**

(12) **EUROPEAN PATENT APPLICATION**
published in accordance with Art. 153(4) EPC

(43) Date of publication:
**29.10.2025 Bulletin 2025/44**

(21) Application number: **23907125.1**

(22) Date of filing: **21.12.2023**

(51) International Patent Classification (IPC):
***B26D 1/04*** *(2006.01)* ***B26D 3/00*** *(2006.01)*
***B26D 7/02*** *(2006.01)* ***B26D 7/08*** *(2006.01)*
***B60S 1/38*** *(2006.01)* ***C08C 4/00*** *(2006.01)*
***C08G 18/32*** *(2006.01)* ***C08G 18/42*** *(2006.01)*
***C08G 18/76*** *(2006.01)*

(52) Cooperative Patent Classification (CPC):
**B26D 1/04; B26D 3/00; B26D 7/02; B26D 7/08; B60S 1/38; C08C 4/00; C08G 18/32; C08G 18/42; C08G 18/76**

(86) International application number:
**PCT/JP2023/045847**

(87) International publication number:
**WO 2024/135765 (27.06.2024 Gazette 2024/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **22.12.2022 JP 2022205749**
**08.12.2023 JP 2023207474**

(71) Applicant: **CANON KABUSHIKI KAISHA**
**Tokyo 146-8501 (JP)**

(72) Inventors:
- **AOYAMA, Takehiko**
**Tokyo 146-8501 (JP)**
- **KODAMA, Katsuya**
**Tokyo 146-8501 (JP)**
- **MATSUDA, Hidekazu**
**Tokyo 146-8501 (JP)**

(74) Representative: **TBK**
**Bavariaring 4-6**
**80336 München (DE)**

(54) **METHOD FOR REGENERATING BLADE RUBBER, AND METHOD FOR MANUFACTURING REGENERATED BLADE RUBBER**

(57) There is provided a regeneration method of blade rubber used for a wiper blade. At least a part of the blade rubber constitutes a contact portion with a wiping target object. The regeneration method includes a step of preparing the blade rubber to be regenerated, and a cutting step of entering a cutting blade into the blade rubber from a side portion of the blade rubber at one end portion A of the blade rubber, and moving the cutting blade relative to the blade rubber toward another end portion B of the blade rubber to remove at least a part of the contact portion, and a storage elastic modulus of the blade rubber at a vibration frequency of $1 \times 10^3$ Hz is 90.0 to 500.0 MPa, and a breaking stress of the blade rubber is 4.2 to 30.0 MPa.

Fig. 4A Fig. 4B Fig. 4C

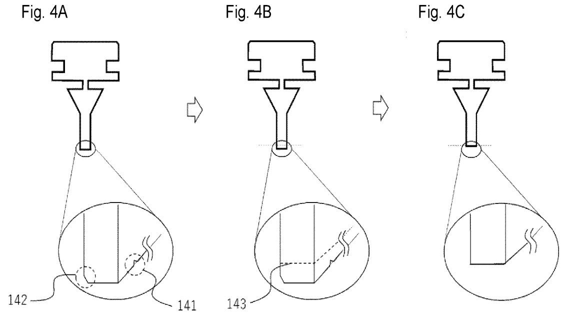


EP 4 640 385 A1

## Description

### TECHNICAL FIELD

The present disclosure relates to a regeneration method of blade rubber used in a wiper blade for cleaning a surface (wiping target surface) of a wiping target object such as a windshield of a conveyance (also simply referred to as a "vehicle" below) such as an automobile, a railway vehicle, an aircraft, or a ship, and a wiper blade for cleaning a protective glass surface of a lens device or an imaging device of a network camera or the like. In addition, the present disclosure also relates to a manufacturing method of regenerated blade rubber.

### BACKGROUND ART

In a blade rubber in a wiper blade for a vehicle, a contact part that contacts with a windshield at a tip end is worn gradually by use for a long time, which causes irregular wiping or the like. A regeneration cutter for regenerating the blade rubber tip-end, whose wiping performance has lowered by the long-time use of the wiper blade, by cutting off the blade rubber tip-end is disclosed in PTL 1.

### CITATION LIST

### PATENT LITERATURE

[PTL 1] Japanese Patent Application Publication No. 2006-174980

### SUMMARY OF INVENTION

### TECHNICAL PROBLEM

The present inventors regenerated commercially available flexible blade rubber made of natural rubber by using a cutter for wiper blade regeneration according to PTL 1 . As a result, the wiping performance of the regenerated blade rubber was not satisfactory.

At least an aspect of the present disclosure is to provide a regeneration method of blade rubber capable of performing regeneration with improved wiping performance of a wiper blade having deteriorated wiping performance. In addition, at least an aspect of the present disclosure is to provide a manufacturing method of regenerated blade rubber that exhibits excellent wiping performance similar to that of a new one.

### SOLUTION TO PROBLEM

According to at least the aspect of the present disclosure, a regeneration method of blade rubber of a wiper blade

in which at least a part of the blade rubber constitutes a contact portion with a wiping target object,
the regeneration method comprising:

- preparing the blade rubber to be regenerated; and
- entering a cutting blade into the blade rubber from a side portion of the blade rubber at one end portion A of the blade rubber, and moving the cutting blade relative to the blade rubber toward another end portion B of the blade rubber to remove at least a part of the contact portion, wherein
- a storage elastic modulus at a vibration frequency of $1\times10^3$ Hz measured in an environment at a temperature of 24°C by using a sample sampled from the blade rubber to include at least a part of the contact portion is 90.0 to 500.0 MPa, and
- a breaking stress of the sample measured in an environment at a temperature of 24°C is 4.2 to 30.0 MPa can be provided.

According to at least the aspect of the present disclosure, a manufacturing method of regenerated blade rubber, the manufacturing method comprising:
obtaining blade rubber regenerated by the above-mentioned regeneration method of blade rubber can be provided.

## ADVANTAGEOUS EFFECTS OF INVENTION

According to at least the aspect of the present disclosure, it is possible to provide a regeneration method of blade rubber capable of recovering cleaning performance of a wiper blade having deteriorated wiping performance.
Further, according to at least the aspect of the present disclosure, it is possible to provide a manufacturing method of regenerated blade rubber that exhibits cleaning performance equivalent to initial cleaning performance.

## BRIEF DESCRIPTION OF DRAWINGS

[Fig. 1]
Figs. 1A, 1B and 1C are views for describing deformation of a tip portion of blade rubber due to entrance of a blade portion.
[Fig. 2]
Figs. 2A, 2B and 2C are views for describing deformation of the tip portion of the blade rubber with high hardness due to the entrance of the blade portion.
[Fig. 3]
Figs. 3A, 3B and 3C are schematic views of a wiper blade and the blade rubber.
[Fig. 4]
Figs. 4A, 4B and 4C are views for describing an example of steps in a regeneration method.
[Fig. 5]
Fig. 5 is a schematic view of an example of a regeneration device of the blade rubber.
[Fig. 6]
Figs. 6A and 6B are schematic views for describing an example of a cutting unit.
[Fig. 7]
Figs. 7A and 7B are schematic views for describing an example of the cutting unit and a clamping member.
[Fig. 8]
Fig. 8 is a schematic view for describing an example of the clamping member.
[Fig. 9]
Figs. 9A and 9B are schematic views for describing an example of a pressing member.
[Fig. 10]
Fig. 10 is a schematic view for describing an example of a biasing member.
[Fig. 11]
Fig. 11 is a view for describing a macro shape of a lip portion of a conventional blade rubber after regeneration.
[Fig. 12]
Fig. 12 is an explanatory schematic view in which a periphery of a tip of the blade portion and the lip portion is further enlarged.
[Fig. 13]
Fig. 13 is an explanatory view of the biasing member.
[Fig. 14]
Figs. 14A and 14B are explanatory views of the biasing member.
[Fig. 15]
Fig. 15 is an explanatory view of a wiping test in an example.
[Fig. 16]
Fig. 16A, 16B, 16C and 16D are explanatory views of an evaluation method of regenerated blade rubber in the example.

## DESCRIPTION OF EMBODIMENTS

In the present disclosure, "from XX to YY" or "XX to YY" indicating a numerical range means a numerical range including a lower limit and an upper limit that are end points unless otherwise specified. In a case where numerical ranges are described in stages, an upper limit and a lower limit of each numerical range can be combined as desired. Furthermore, in the present disclosure, for example, description such as "at least one selected from the group consisting of XX, YY, and ZZ" means any of XX, YY, ZZ, a combination of XX and YY, a combination of XX and ZZ, a combination of YY and ZZ, or a combination of XX, YY, and ZZ. When XX is a group, a plurality of constituents may be selected from XX, and the same applies to YY and ZZ.
Hereinafter, embodiments for carrying out this disclosure will be specifically exemplified with reference to the

drawings. However, it is to be understood that dimensions, materials, shapes, relative arrangements, and the like of components described in the embodiments are intended to be changed as deemed appropriate in accordance with configurations and various conditions of members to which the disclosure is to be applied. In other words, the scope of this disclosure is not intended to be limited to the embodiments described below. In addition, in the following description, components having the same function are denoted by the same reference signs in the drawings, and the description thereof may be omitted.

The present inventors studied the reason why the wiping performance of regenerated blade rubber obtained by regenerating commercially available flexible blade rubber by using the cutter for regeneration according to PTL 1 does not reach the wiping performance of a new wiper blade. First, the present inventors observed a cut surface of the regenerated blade rubber in detail. As a result, the inventors found that a sawtooth shape disturbed in a wave shape was generated on the cut surface of the regenerated wiper blade. The above-described sawtooth shape that is disturbed in a wave shape and appears on the cut surface may be also referred to as a "vibration shape" or a "chatter mark" below.

Therefore, the present inventors observed in detail the microscopic behavior of the blade portion and the blade rubber in a regeneration process when a commercially available blade rubber is regenerated by using the cutter for regeneration according to PTL 1. That is, first, a blade portion 101 of the cutter for regeneration was caused to contact a side surface on one end side of a cutting target part of blade rubber 103 (see Fig. 1A). Then, the blade portion was entered into the blade rubber. At this time, it has been found that the side surface of the cutting target portion, that is, the entered portion of the blade rubber by the blade portion greatly elastically deformed as illustrated in Fig. 1B due to the pressure of the blade portion at the time of entrance, and that cutting then progressed while the blade rubber broke.

The present inventors found that elastic deformation and breakage of the blade rubber described above are repeated in the process of causing the blade portion to advance from one end side toward the other end side of the blade rubber, whereby a vibration shape is generated on a cut surface 105 (Fig. 1C). It is considered that, in the regenerated blade rubber in which the vibration shape is generated on the cut surface, the contact with a cleaning target surface becomes uneven, and thus, wiping unevenness is generated on a wiping target surface. In order for the blade rubber to exhibit high wiping performance, for example, in the cross-sectional view in a direction perpendicular to the longitudinal direction of the blade rubber illustrated in Fig. 3A, it is considered important that edge portions 8 and 9 of the blade rubber uniformly contact the wiping target surface in the longitudinal direction of the blade rubber. However, in the regenerated blade rubber in which the vibration shape is generated on the cut surface, it is considered that the edge portion does not uniformly contact the wiping target surface in the longitudinal direction of the blade rubber due to the vibration shape, and the wiping unevenness occurs on the wiping target surface.

Based on such considerations, the present inventors recognized that, in regenerating blade rubber, it is extremely important to prevent deformation of the blade rubber at the time of entrance of the blade portion and to prevent repetition of elastic deformation and breakage of the blade rubber accompanying the progress of the blade portion in order to prevent disturbance of the shape of the cut surface and to obtain regenerated blade rubber having excellent wiping performance.

Based on such recognition, the present inventors have further studied. In the study process, the present inventors first studied to increase the hardness of the blade rubber in order to suppress deformation of the blade rubber at the time of entrance of the blade portion. That is, as illustrated in Fig. 2A, a blade portion 101 of the cutter for regeneration was caused to contact a side surface of the cutting target portion of blade rubber 201 having increased hardness, and then the blade portion 101 was entered into the blade rubber. As a result, due to the high hardness of the blade rubber 201, elastic deformation of the blade rubber at the time of the entrance of the blade portion was suppressed as illustrated in Fig. 2B. However, it has been confirmed that an excessive load is applied to the blade rubber until the blade rubber is broken in the process of advancing the blade portion thereafter, an advancing direction of the blade portion 101 becomes unstable, and a cut surface 203 may have a vibration shape disturbed in a wave shape at a shorter pitch than that in a case where the hardness of the blade rubber is low (Fig. 2C). Such regenerated blade rubber having the vibration shape also has ununiform contact with the cleaning target surface, which may cause wiping unevenness.

From such analysis results, it has been recognized that in order to obtain regenerated blade rubber exhibiting excellent wiping performance similar to that of a new blade, blade rubber having physical properties that is hardly deformed at the time of the entrance of the blade portion and does not hinder smooth progress of the blade portion is effective in obtaining a regenerated wiper blade exhibiting excellent wiping performance similar to that of a new blade rubber. As a result of further studies based on such recognition, it has been found that when the storage elastic modulus and the breaking stress of the blade rubber to be cut are set within predetermined ranges, there is no disturbance in the shape of the cut surface, which contributes to manufacturing of a regenerated wiper blade exhibiting excellent wiping performance similar to that of a new blade rubber.

<Detailed Analysis of Cutting Phenomenon>

The present inventors have found that, for example, blade rubber according to an aspect described below and a

wiper blade using the blade rubber can suppress elastic deformation of the blade rubber at the time of entrance of a blade portion for regeneration and suppress a load at the time of breakage. As a result, it has been found that the cut surface can be prevented from having a disturbed shape, and the cleaning performance by the regenerated blade rubber can be made comparable to that of a new blade rubber. As a result, the blade rubber can be repeatedly used, and effective use of resources can be promoted.

As described above, in the process of causing the blade portion to contact the blade rubber and entering the blade portion into the blade rubber, the blade portion collides with the blade rubber, and deformation and breakage of the blade rubber by the blade portion advance. Therefore, the present inventors have found that the deformability of the blade rubber with respect to the stress generated in a very short time such as the collision of the blade portion is important, and that the deformability correlates with the elastic modulus when vibration at a fast frequency is applied. In addition, in a general blade rubber, in a case where the frequency dependency of the elastic modulus is evaluated, the scale of a structure that vibrates becomes smaller as vibration of a higher frequency is applied, and a value of the elastic modulus tends to be high. From these results, the present inventors have found that by setting the storage elastic modulus of the blade rubber at a vibration frequency of $1\times10^3$ Hz within a predetermined range as an index indicating deformability at the time of entrance of the blade portion, deformation of the blade rubber at the time of entrance of the blade portion can be stably suppressed.

Specifically, in an environment at a temperature of 24°C, the storage elastic modulus (also referred to as "E'" below) when the vibration frequency of a sample sampled from the blade rubber is set to $1\times10^3$ Hz is 90.0 to 500.0 MPa. By setting E' the above numerical range, the blade portion can be entered into the side surface of the blade rubber without applying an excessive pressing force to the blade portion, and deformation of the blade rubber at the time of entrance of the blade portion can be suppressed. The storage elastic modulus E' is preferably 100.0 to 400.0 MPa, and more preferably 134.0 to 400.0 MPa.

In addition, the present inventors have observed in detail the blade rubber when the blade portion advances in the blade rubber at the time of cutting the blade rubber made of natural rubber. As a result, it was confirmed that the blade rubber was locally extended and deformed with the progress of the blade portion, and then the blade rubber was broken and cut.

That is, it is considered that the extension of the blade rubber with the progress of the blade portion and the subsequent breakage are repeated, whereby the shape of the cut surface is disturbed. Based on such considerations, the present inventors have made further studies. As a result, it has been found that adjusting the breaking stress of the blade rubber as a regeneration target within a predetermined range contributes to smooth progress of the blade portion.

Specifically, by setting the breaking stress of the blade rubber to be in a range of 4.2 to 30.0 MPa, stable progress of the blade portion can be realized. In a case where the breaking stress is 4.2 MPa or more, the blade rubber can be prevented from being broken prior to the progress of the blade portion. In addition, in a case where the breaking stress is 30.0 MPa or less, it is possible to prevent disturbance of the blade portion in the advancing direction due to an increase in the load applied to the blade portion when the blade portion advances in the blade rubber. The breaking stress of the blade rubber is preferably 8.0 to 28.0 MPa, and more preferably 10.0 to 25.0 MPa.

As described above, it is preferable that the blade rubber satisfies the following Characteristics i) and ii) in order to suppress the cut surface of the regenerated blade rubber from having a vibration shape and to make the cleaning performance of the blade rubber after regeneration comparable to that of a new blade rubber.

Characteristic i) The storage elastic modulus of a sample sampled to include at least a part of the contact portion from the blade rubber when the vibration frequency is set to $1\times10^3$ Hz in an environment of 24°C is 90.0 to 500.0 MPa (preferably 100.0 to 400.0 MPa).

Characteristic ii) The breaking stress of the sample is 4.2 to 30.0 MPa (preferably 8.0 to 28.0 MPa).

In a case where the conventional blade rubber is designed to increase E', the breaking stress tends to increase accordingly. Therefore, it was difficult to set E' and the breaking stress to be in the above ranges at the same time. That is, in a case where E' of the blade rubber is small, at the time of entrance of the blade portion as illustrated in Figs. 1A to 1C, the blade rubber is deformed, and the shape of an entering portion of the blade portion is disturbed. On the other hand, in a case where E' of the blade rubber is large, the breaking stress increases accordingly, the load applied to the blade portion becomes excessive, and the advancing direction of the blade portion becomes unstable as illustrated in Figs. 2A to 2C. As a result, in either case, the cut surface becomes uneven.

On the other hand, in the blade rubber satisfying the above Characteristics i) and ii), deformation at the time of entrance of the blade portion is suppressed, and a load applied to the blade portion when the blade portion advances in the blade rubber in the cutting process is less likely to be excessive. As a result, it is considered that the generation of the vibration shape on the cut surface can be suppressed.

A specific configuration of the blade rubber capable of setting both E' and the breaking stress, which are characteristics of the present disclosure, within the above ranges will be described below.

<Blade Rubber>

A material having the specific E' and breaking stress is not particularly limited, and specifically, the blade rubber preferably contains polyurethane. Polyurethane is preferably a polyurethane elastomer.

Polyurethane is obtained mainly from raw materials such as a polyol, a chain extender, a polyisocyanate, a catalyst, and other additives. The polyurethane is composed of a hard segment and a soft segment. The hard segment is generally constituted by a chain extender containing a polyisocyanate and a short chain diol. For example, it refers to an aggregated crystal component of a urethane bond, a nurate bond, and a component having low molecular mobility at a crosslinking point and in the vicinity of the crosslinking point. On the other hand, the soft segment is generally constituted by long chain polyol such as polyester polyol, polyether polyol, or polycarbonate polyol, and polyisocyanate. For example, it refers to a segment between a crosslinking point and a crosslinking point.

In order to set the storage elastic modulus E' and the breaking stress within the above ranges, it is preferable that the hard segment and the soft segment in polyurethane are finely and uniformly dispersed. In a case where the distribution state of the hard segment and the soft segment is uneven, deformation due to the entrance of the blade portion may increase by a part of a component having high mobility, and a load at the time of the entrance of the blade portion may increase by a part of a component having low mobility. As a result, the entrance of the blade portion becomes unstable, and vibration is generated. Therefore, it is difficult to achieve both the storage elastic modulus and the breaking stress according to the present disclosure within the above ranges.

Conventional polyurethanes have a relatively large hard segment in which parts where urethane bonds are aggregated by interaction are further aggregated. In order to improve the mechanical strength such as the storage elastic modulus, it is common to form an aggregate of relatively large hard segments. According to the study of the present inventors, the blade rubber produced by using such polyurethane does not simultaneously satisfy both the storage elastic modulus and the breaking stress in the above ranges according to the present disclosure.

In addition, in a high frequency region, for example, a vibration frequency of $1\times10^3$ Hz, the hard segment of polyurethane has relatively low molecular mobility and cannot move sufficiently. Therefore, it is considered that the storage elastic modulus E' in the high frequency region is mainly governed by the movement of the soft segment having relatively high molecular mobility. Since the time to relaxation is shortened in a higher frequency region, the movement of the soft segment is also limited. As a result, the entirety of a polymer cannot move sufficiently and the elastic modulus increases rapidly. Thus, for the elastic modulus in the high frequency region, it is more effective to control the molecular mobility of the soft segment than the molecular mobility of the hard segment.

That is, E' is reduced as the molecular mobility of the soft segment becomes larger, and E' is increased as the molecular mobility of the soft segment becomes smaller. For the polyurethane in the blade rubber according to an aspect of the present disclosure, it is effective to reduce the molecular mobility of the soft segment in order to set the storage elastic modulus E' within the above range.

The molecular mobility of the soft segment can be reduced, for example, by at least one selected from the group consisting of introducing a branched structure (three-dimensional structure) into the molecular structure of polyurethane and shortening the distance between crosslinking points. By introducing a branched structure and shortening the distance between crosslinking points, the molecular mobility of the soft segment can be reduced, and as a result, the storage elastic modulus in the high frequency region can be increased.

In addition, introduction of the branched structure and shortening of the distance between the crosslinking points can suppress crystallization due to stacking of the soft segments, and can further prevent aggregation of the hard segments. As a result, the formation of huge hard segments due to the aggregation of the hard segments in polyurethane is suppressed, which also contributes to the fine and uniform dispersion of the hard segments.

Polyurethane in which hard segments are finely and uniformly dispersed will be described as an example. However, the constituent material of the blade rubber according to the present disclosure is not limited to these polyurethanes.

As an example, a cured product of a urethane raw material mixture containing a diisocyanate or a trifunctional or higher polyfunctional isocyanate, and a diol or a trifunctional or higher polyfunctional alcohol in an appropriate concentration range has a branched structure in a molecular structure of polyurethane, aggregation of hard segments is suppressed, and polyurethane in which hard segments are finely and uniformly dispersed can be obtained.

Specifically, for example, it is preferable to use, as a urethane raw material, at least one of an alcohol containing a trifunctional or higher polyfunctional alcohol and an isocyanate compound containing a trifunctional or higher polyfunctional isocyanate. It is also preferable to use, as the urethane raw material, an alcohol containing at least one selected from a diol and a trifunctional or higher polyfunctional alcohol and an isocyanate compound containing a trifunctional or higher polyfunctional isocyanate. It is also preferable to use, as the urethane raw material, an alcohol containing a trifunctional or higher polyfunctional alcohol and an isocyanate compound containing a diisocyanate and a trifunctional or higher polyfunctional isocyanate. In particular, it is preferable to use, as the urethane raw material, a trifunctional or higher polyfunctional isocyanate and a trifunctional or higher polyfunctional alcohol.

For example, the polyurethane is preferably a reaction product of a polyurethane raw material mixture containing an isocyanate compound containing 4,4'-MDI, a polyester polyol, and a trifunctional or higher polyfunctional alcohol. A polyurethane elastomer is more preferably a reaction product of a polyurethane raw material mixture containing an isocyanate compound containing a trifunctional or higher polyfunctional isocyanate and 4,4'-MDI, a polyester polyol, and a trifunctional or higher polyfunctional alcohol.

In the polyurethane obtained as the reaction product of a polyurethane raw material mixture containing a trifunctional or higher polyfunctional isocyanate and a trifunctional or higher polyfunctional alcohol, the orientation of molecules is suppressed by steric hindrance, and aggregation of hard segments is more reliably suppressed. In addition, since the molecular mobility of the soft segment is also reduced, the polyurethane is suitable for achieving the storage elastic modulus E' and the breaking stress according to the present disclosure.

In addition, in a case where the soft segment part has, for example, a linear alkylene structure, the crystallinity is enhanced by stacking the soft segments. As a result, the hard segment is less likely to be dispersed. Therefore, it is also effective to introduce an alkylene structure having a side chain part into the soft segment part in order to suppress aggregation of the hard segments. Specifically, for example, introducing a substructure as represented by the following structural formulas (i) to (iv) into a soft segment part between two urethane bonds is effective for miniaturization of a hard segment.

$-CH_2-CH(CH_3)-CH_2-CH_2-O-$ (i)

$-CH_2-CH_2-CH(CH_3)-CH_2-O-$ (ii)

$-CH_2-CH(CH_3)-O-$ (iii)

$-CH(CH_3)-CH_2-O-$ (iv)

The structures of the structural formulas (i) and (ii) are structures generated by ring-opening polymerization of 3-methyl tetrahydrofuran, and are substantially the same. The structures of the structural formulas (iii) and (iv) are structures generated by ring-opening polymerization of 1,2-propylene oxide, and are substantially the same. The polyurethane having these structures between two adjacent urethane bonds is obtained by causing a polyether polyol or a polyester polyol having these structures to react with isocyanate. Here, in a case where a bifunctional alcohol (diol) and a bifunctional isocyanate (diisocyanate) are used as the polyurethane raw materials, it is usually difficult to finely disperse the hard segments. However, by introducing the above-described substructure into the soft segment part, the hard segment can be finely dispersed even in a case where a diol and a diisocyanate are used as polyurethane raw materials. As a result, a polyurethane which provides blade rubber satisfying the parameters according to the present disclosure can be obtained.

In addition, as a method of suppressing crystallization due to stacking of the soft segments and preventing aggregation of the hard segments other than introducing the side chains into the soft segment part described above, a method of using two or more types of alcohols having different number of carbon atoms in a linear part as the alcohol as a raw material of polyurethane can be exemplified. In the polyurethane obtained by using two or more types of alcohols having different number of carbon atoms in the linear part, even if the soft segment part has a linear alkylene structure, crystallization due to stacking of the soft segments can be suppressed by the different number of carbon atoms. In addition, since the number of carbon atoms in the soft segment part is different, aggregation of the urethane bond portion is suppressed, whereby aggregation of the hard segments can be prevented.

Thus, even in a case where a diol having a linear alkylene structure in molecules and a diisocyanate are used as raw materials of polyurethane, the hard segment can be miniaturized by using a plurality of types of diols having different carbon atoms in the linear alkylene structure as the diol. As a result, a polyurethane which provides blade rubber satisfying the parameters according to the present disclosure can be obtained. The maximum value of the difference in the number of carbon atoms in the linear part of two or more types of alcohols is, for example, preferably 6 or less, and more preferably 4 or less. It is preferable that a long chain polyol such as a polyester polyol, a polyether polyol, or a polycarbonate polyol contains two or more types of alcohols having different number of carbon atoms in the linear part. More specifically, examples of the plurality of types of diols include a combination of a polybutylene adipate polyester polyol and a polyhexylene adipate polyester polyol, for example. Examples of the alcohol include the following alcohols: polyester polyols such as polyethylene adipate polyester polyols, polybutylene adipate polyester polyols, polyhexylene adipate polyester polyols, (polyethylene/polypropylene) adipate polyester polyols, (polyethylene/polybutylene) adipate polyester polyols, (polyethylene/polyneopentylene) adipate polyester polyols; polycaprolactone-based polyols obtained by ring-opening polymerization of caprolactone; polyether polyols such as polyethylene glycols, polypropylene glycols, and polytetramethylene ether glycols; and polycarbonate diols. These can be used singly or in combination of two or more types.

In addition, as described above, it is preferable to use two or more types of polyols having different number of

carbon atoms in the linear part (alkylene chain) as the alcohol because a urethane in which crystallization of the soft segment is suppressed and aggregation of the hard segment is suppressed can be obtained. In this case, for example, it is preferable to use at least two selected from the group consisting of polyester polyols such as polyethylene adipate polyester polyol, polybutylene adipate polyester polyol, polyhexylene adipate polyester polyol, (polyethylene/polypropylene) adipate polyester polyol, (polyethylene/polybutylene) adipate polyester polyol, and (polyethylene/polyneopentylene) adipate polyester polyol.

The content ratio of the trifunctional or higher polyfunctional isocyanate among the constituent components of the polyurethane is preferably 8 to 30 mass%, and more preferably 12 to 20 mass%. However, it is important to satisfy the storage elastic modulus E' and the breaking stress, and a trifunctional or higher polyfunctional isocyanate does not need to be used. The content ratio of a polyol such as a polyester polyol among the constituent components of the polyurethane is preferably 50 to 80 mass%, and more preferably 55 to 70 mass%.

The content ratio of the trifunctional or higher polyfunctional alcohol among the constituent components of the polyurethane is preferably 1 to 15 mass%, and more preferably 2 to 10 mass%.

A diol capable of extending the molecular chain of polyurethane, or a trifunctional or higher polyfunctional alcohol can also be used as the chain extender.

Examples of the diol include the following.

Ethylene glycol (EG), diethylene glycol (DEG), propylene glycol (PG), dipropylene glycol (DPG), 1,4-butanediol (1,4-BD), 1,6-hexanediol (1,6-HD), 1,4-cyclohexanediol, 1,4-cyclohexanedimethanol, xylylene glycol (terephthalyl alcohol), and triethylene glycol. These can be used singly alone or in combination of two or more types.

Examples of the trifunctional or higher polyfunctional alcohol include trimethylolpropane (TMP), glycerin, pentaerythritol, and sorbitol. These can be used singly alone or in combination of two or more types.

One method for improving the storage elastic modulus of polyurethane is to introduce a three-dimensional crosslinked structure. Introduction of the three-dimensional crosslinked structure is preferable from the viewpoint of setting E' and the breaking stress according to the present disclosure within the above ranges. As a method for introducing the three-dimensional crosslinked structure, for example, it is preferable to use a trifunctional or higher polyfunctional alcohol as the chain extender. In addition, introduction of the branched structure into the polyurethane by use of a trifunctional or higher polyfunctional alcohol may suppress crystallization of the polyurethane and further suppress aggregation of the hard segments.

Here, as the polyfunctional alcohol, a trifunctional alcohol is preferably used from the viewpoint of suppressing an excessive increase in hardness due to an excessively high degree of crosslinking of the polyurethane. Among trifunctional alcohols, a triol that has a methylene skeleton next to the hydroxyl group and is capable of having a crosslinked structure that is flexible in molecular structure is preferable because the triol has an effect of further suppressing the crystallinity of the hard segment. Examples of such triols include, for example, a trimethylolpropane (TMP) and glycerin. Among triols, TMP is particularly preferably used.

Examples of the isocyanate compound include the following compounds.

4,4'-diphenylmethane diisocyanate (4,4'-MDI), polymeric MDI, 2,4-tolylene diisocyanate (2,4-TDI), 2,6-tolylene diisocyanate (2,6-TDI), xylene diisocyanate (XDI), 1,5-naphthylene diisocyanate (1,5-NDI), p-phenylene diisocyanate (PPDI), hexamethylene diisocyanate (HDI), isophorone diisocyanate (IPDI), 4,4'-dicyclohexylmethane diisocyanate (hydrogenated MDI), tetramethylxylene diisocyanate (TMXDI), carbodiimide-modified MDI, triphenylmethane-4, 4', 4"-triisocyanate (TTI), tris(phenyl isocyanate) thiophosphate (TPTI).

Among the isocyanate compounds exemplified above, 4,4'-MDI in which two isocyanate groups have equivalent reactivity is preferable. In addition, it is preferable to use a trifunctional or higher polyfunctional isocyanate in combination. By using a trifunctional or higher polyfunctional isocyanate, a branched structure can be introduced into the polyurethane, and it is effective for further suppressing aggregation of the hard segments. In addition, since a denser crosslinked structure can be introduced into the polyurethane, the polyurethane having the storage elastic modulus and the breaking stress according to the present disclosure can be obtained.

The content ratio of the isocyanate compound (diisocyanate) other than the trifunctional or higher polyfunctional isocyanate among the constituent components of the polyurethane elastomer is preferably 5 to 40 mass%, and more preferably 10 to 35 mass%.

Examples of the trifunctional or higher polyfunctional isocyanate include at least one selected from the group consisting of triphenylmethane-4, 4', 4"-triisocyanate (TTI), tris(phenyl isocyanate)thiophosphate (TPTI), and polymeric MDI. Among them, tris(phenyl isocyanate)thiophosphate (TPTI) and polymeric MDI can be more suitably used. These isocyanates have a methylene group or an ether group between a plurality of NCO groups, and can appropriately maintain a distance between a plurality of urethane bonds. Therefore, it is advantageous for suppressing aggregation of hard segments.

Here, the polymeric MDI is represented by the following chemical formula (1) and chemical formula (1)'. n in the chemical formula (1)' is preferably from 1 to 4. The chemical formula (1) is a case where n is 1 in the chemical formula (1)'.

[C1]

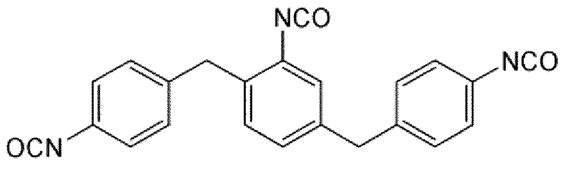

(1)

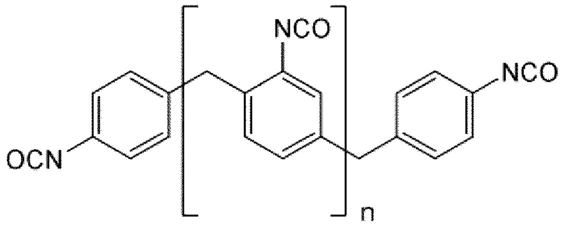

(1)'

In a case where the polyurethane in the blade rubber according to the present disclosure is a cured product of a polyurethane raw material mixture that contains an isocyanate compound containing a diisocyanate and a trifunctional or higher polyfunctional isocyanate and an alcohol containing a trifunctional or higher polyfunctional alcohol, the blade rubber preferably has the following physical properties.

A sample (polyurethane) sampled at the tip portion of the blade rubber is heated and vaporized in an ionization chamber, and heated to 1000°C at a ramp rate of 10°C/s by using a mass spectrometer of a direct sample introduction type that ionizes a sample molecule. The detection amount of all ions obtained as a result is set as M1, and the integrated intensity of the peak of the extracted ion thermogram corresponding to the range of a m/z value derived from a trifunctional or higher polyfunctional isocyanate is set as M2. At this time, M2/M1 is preferably 0.0010 to 0.0150, more preferably 0.0020 to 0.0150, and further preferably 0.0100 to 0.0145.

In addition, when the integrated intensity of the peak of the extracted ion thermogram corresponding to the range of the m/z value derived from diisocyanate is set as M3, M3/M1 is preferably 0.0200 to 0.1100, particularly preferably 0.0360 to 0.0900, and further preferably 0.0380 to 0.0760. When M2/M1 and M3/M1 are in the above ranges, a structure derived from a trifunctional or higher polyfunctional isocyanate having low crystallinity is introduced into the polyurethane elastomer in the blade rubber by an appropriate amount. As a result, in the polyurethane, aggregation of the hard segments is suppressed, and the hard segments are more finely and uniformly dispersed. In addition, excessive development of the crosslinked structure in the polyurethane is suppressed, and the storage elastic modulus E' and the breaking stress can be more easily adjusted to fall within a range of 90.0 to 500.0 MPa and a range of 4.2 to 30.0, respectively.

Furthermore, M2/M3 is preferably 0.0130 to 0.5000, more preferably 0.1000 to 0.4000, and further preferably 0.1000 to 0.3000. M2/M3 is a parameter representing a ratio between a structural part derived from a diisocyanate and a structural part derived from a trifunctional or higher polyfunctional isocyanate in a structure derived from an isocyanate of the polyurethane. By setting M2/M3 within the above range, the elastic modulus of the polyurethane can be suppressed from excessively increasing, and the aggregation of the hard segments in the polyurethane can be further suppressed.

Here, in a case where the polyurethane in the blade rubber according to an aspect of the present disclosure is a polyurethane produced by using, as one of raw materials, polymeric MDI represented by the chemical formula (1)' as a trifunctional or higher polyfunctional isocyanate, in the extracted ion thermogram obtained by the mass spectrometry described above, the sum of integrated intensities of peaks of the extracted ion thermogram corresponding to a range in which a m/z value derived from n=1 in the structure represented by the chemical formula (1)' is 380.5 to 381.5, a range in which the m/z value derived from n=2 is 511.5 to 512.5, a range in which the m/z value derived from n=3 is 642.5 to 643.5, and a range in which the m/z value derived from n=4 is 773.5 to 774.5 only needs to be set as M2.

In addition, in a case where the polyurethane in the blade rubber according to an aspect of the present disclosure is a polyurethane produced by using, as one of raw materials, diphenylmethane diisocyanate (4,4'-MDI) represented by the following chemical formula (2) as a bifunctional isocyanate (diisocyanate), in the extracted ion thermogram obtained by the mass spectrometry described above, the integrated intensity of the peak corresponding to a range in which the m/z value derived from the structure represented by the chemical formula (2) is 249.5 to 250.5 only needs to be set as M3.

[C2]

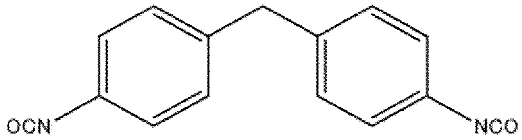

(2)

Furthermore, in a case where the polyurethane in the blade rubber according to the present aspect is a reaction product of a raw material composition containing an alcohol containing a trifunctional or higher polyfunctional alcohol, particularly in a case where a polyfunctional isocyanate is used in combination such that M2/M1 is 0.0010 to 0.0150, the polyurethane preferably has the following physical properties. That is, a sample sampled from the polyurethane is measured by pyrolysis GCMS (gas chromatography and mass spectrometry). At this time, the concentration of a component derived from the trifunctional or higher polyfunctional alcohol in the polyurethane is preferably 0.04 mmol/g to 0.39 mmol/g, more preferably 0.14 mmol/g to 0.39 mmol/g, and further preferably 0.18 mmol/g to 0.39 mmol/g. In a case where the concentration of the component derived from the trifunctional or higher polyfunctional alcohol is 0.04 mmol/g or more, the aggregation of the hard segments can be more reliably suppressed. In addition, in a case where the concentration of the component derived from the trifunctional or higher polyfunctional alcohol is 0.39 mmol/g or less, excessive development of the crosslinked structure in the polyurethane can be suppressed, and the storage elastic modulus can be prevented from becoming too high. Note that the concentration of the component derived from the trifunctional or higher polyfunctional alcohol in the polyurethane is calculated by the following formula (2).

Formula (2): Concentration (mmol/g) of component derived from trifunctional or higher polyfunctional alcohol =

[amount (g) of component derived from trifunctional or higher polyfunctional alcohol/molecular weight of component derived from trifunctional or higher polyfunctional alcohol ×1000]/[mass (g) of polyurethane]

In addition, as another aspect of the polyurethane that provides an elastic body satisfying the storage elastic modulus and the breaking stress according to the present aspect, a cured product of a polyurethane raw material mixture containing almost no polyfunctional isocyanate, specifically, in which M2/M1 is less than 0.0010, and containing trimethylolpropane (TMP) as a crosslinking component and a diisocyanate such as diphenylmethane diisocyanate (MDI) can be exemplified. Here, examples of diphenylmethane diisocyanate include 4,4'-MDI described above.

Since TMP has a methylene skeleton next to a hydroxyl group, polyurethane having a three-dimensional crosslinked structure that is flexible in molecular structure can be provided. The crosslinked structure derived from TMP is a flexible structure and can form a branched structure by crosslinking. Therefore, the use amount of the polyfunctional isocyanate can be suppressed, excessive rigidity can be suppressed by mainly using TMP, and crosslinking can be introduced at a higher density. By introducing the three-dimensional crosslinked structure derived from TMP at a high density, the crosslinked density is increased, and the soft segment part existing between the crosslinked structures is less likely to interact due to steric hindrance of the crosslinked structure derived from TMP. As a result, the formation of a crystalline structure due to the interaction between the soft segments, that is, the formation of the hard segment can be prevented.

Further, uniformizing the length of the soft segment is effective for preventing aggregation of the hard segments derived from the urethane bonds. For a polyurethane having a short distance between crosslinking points and a uniform length between crosslinking points, for example, it is preferable that the number average molecular weight of a prepolymer as a raw material of the polyurethane is set within a range of 8000 to 120,000, and a chain extender such as 1,4-butanediol is not used as much as possible. Particularly, it is preferable that 1,4-butanediol is not used at all. It is preferable that 1,4-butanediol is not used because it is easy to form a crystalline structure. As described above, the polyurethane that provides the elastic body satisfying the storage elastic modulus E' and the breaking stress according to the present disclosure can be produced without using a polyfunctional isocyanate such as polymeric MDI as the raw material. In particular, in a case where it is desired to obtain blade rubber having a lower storage elastic modulus E' in the range (90.0 to 500.0 MPa) according to the present disclosure, it is effective to use a polyurethane into which a three-dimensional crosslinked structure derived from TMP is introduced while suppressing the use amount of a polyfunctional isocyanate such as

polymeric MDI or not using the polyfunctional isocyanate such as polymeric MDI.

In the polyurethane according to the other aspect, the concentration of a component derived from the trifunctional or higher polyfunctional alcohol in the polyurethane is preferably set to be 0.30 to 0.70 mmol/g, more preferably se to be 0.40 to 0.61 mmol/g, and further preferably set to be 0.50 to 0.60 mmol/g.

In addition, in the polyurethane according to the other aspect, M2/M1 is preferably as small as possible, and more preferably 0.0008 or less. The lower limit of M2/M1 is not particularly limited, and is preferably 0.0000 or more. That is, in the polyurethane according to the other aspect, M2/M1 is preferably 0.0000 or more and less than 0.0010, and particularly preferably 0.0000 to 0.0008. In addition, the concentration of the component derived from the trifunctional or higher polyfunctional alcohol in the polyurethane is preferably 0.30 to 0.70 mmol/g, particularly preferably 0.40 to 0.61 mmol/g, and further preferably 0.50 to 0.60 mmol/g.

Furthermore, in the polyurethane according to the other aspect, M3/M1 is preferably 0.0900 to 0.2000, and particularly preferably 0.0950 to 0.1300.

The polyurethane raw material can contain a catalyst for promoting the reaction of the isocyanate compound and the alcohol. As the catalyst, a commonly used catalyst for curing a polyurethane can be used, and examples thereof include a tertiary amine catalyst and a tertiary amino alcohol, and specifically, the following catalysts can be exemplified.

Aminoalcohols such as dimethyl ethanolamine, N,N,N'-trimethylaminopropylethanolamine, and N,N'-dimethylhexanolamine; trialkylamine such as triethylamine; and tetraalkyldiamines such as N,N,N'N'-tetramethyl-1,3-butanediamine; and triethylenediamine, piperazine-based compounds, and triazine-based compounds.

Examples of the tertiary amino alcohol include 2-(dimethylamino)ethanol, 3-(dimethylamino)propanol, 2-(dimethylamino)-1-methylpropanol, 2-{2-(dimethylamino)ethoxy}ethanol, 2-{2-(diethylamino)ethoxy}ethanol, and 2-[{2-(dimethylamino)ethyl}methylamino]ethanol.

Further, organic acid salts of metals, such as potassium acetate, and potassium alkali octyrate can also be used. Additionally, metal catalysts, generally to be used for the urethanization, for example, dibutyltin dilaurate, can also be used. These can be used singly alone or in combination of two or more thereof.

As the raw material forming the blade rubber, additives such as a pigment, a plasticizer, a waterproof agent, an antioxidant, an ultraviolet absorber, a light stabilizer, and a hydrolysis inhibitor can be blended as necessary in a range without an influence on the regeneration of the blade rubber.

<Configuration of Wiper Blade>

The wiper blade can be used as a wiping target object of a device or the like such as a transportation device including a vehicle as typified by an automobile, an aircraft, a ship, and the like, and an industrial machine device such as a construction machine. These transportation device and industrial machine device are also collectively referred to as vehicles below. A wiper device can be applied to a windshield of a vehicle. The windshield is not limited to the front window, and also includes side windows and rear windows.

The wiper blade can also be used as a wiper blade for wiping a protective glass surface of a lens device or an imaging device of a network camera or the like. A wiper blade of a windshield of a vehicle will be described as an example, but the wiper blade is not limited thereto.

<Wiper Device>

For example, as illustrated in Fig. 3A, the wiper device includes a wiper arm 300 and a wiper blade 110 mounted on the wiper arm 300. The wiper arm 300 is associated with, for example, a drive motor (not illustrated). The wiper blade 110 includes the blade rubber 100 and a blade stay 210 as a support member that supports the blade rubber 100. The blade stay 210 may adopt various known types of support members such as a flat type in addition to a sequential branch type as illustrated in Fig. 3A.

As illustrated in Fig. 3B, the blade rubber 100 includes a base portion 1, which is an attachment portion of the blade rubber 100 to the blade stay 210, and a lip portion 3 which is pivotably joined to the base portion 1 via a neck portion 2. The wiper blade is formed in a substantially uniform cross-sectional shape in the longitudinal direction. At least a part of the tip of the blade rubber constitutes a contact portion with a wiping target object.

In a cross section in a direction orthogonal to a longitudinal direction of the blade rubber, the lip portion 3 includes a shoulder portion extending to a side of the neck portion at an end portion on the neck portion 2 side of the lip portion 3. Further, the lip portion 3 may have a tapered portion 4 whose width gradually decreases from the side closer to the base portion 1 toward a direction away from the base portion 1 in order to stabilize the contact posture of the blade rubber. Further, the degree of gradual reduction of the width of the tapered portion 4 may be changed stepwise. For example, the lip portion 3 may have a lip tip portion in which the degree of gradual reduction of the width of the tapered portion decreases on the side closer to the tip away from the base portion 1 of the lip portion. In addition, the lip tip portion may have portions with the same or substantially the same width from the side closer to the base portion 1 toward the tip. The blade rubber

illustrated in Fig. 3B has a plate-like part continuous with the tapered portion 4 on the tip side of the lip portion 3.

The wiper device cleans the surface of a cleaning target member by causing at least a part of the tip of the lip portion 3 to contact the surface of the windshield, which is the cleaning target member, represented by a glass surface. As a result, at least a part of the tip of the lip portion 3 constitutes a contact portion with the windshield. In the lip portion 3, the contact portion is formed to extend in the longitudinal direction of the blade rubber.

For example, an aspect in which in a cross section in a direction perpendicular to the longitudinal direction of the blade rubber, a width of the neck portion 2 is narrowed with respect to the base portion 1 and the lip portion 3 can be made. Further, for example, the lip portion is an elastic body. As a result, as illustrated in Fig. 3C, the lip portion 3 is inclined in a wiping direction, and at least a part of the lip portion 3 is caused to contact the surface of the cleaning target member.

As illustrated in Fig. 3B, the lip portion 3 has a first side surface 5 continuous from the tapered portion 4 and a second side surface 6 opposite to the first side surface 5. In addition, the lip portion 3 includes the first side surface 5 and the second side surface 6, and the tip surface 7 constituting a first edge 8 and a second edge 9 as the tip side edges on the side farthest from the base portion 1 of the lip portion 3.

At least a part of the contact portion to be processed by the regeneration method according to the present disclosure is a part of the tip of the lip portion 3 and is a part including at least the tip surface 7.

<Regeneration Method of Blade Rubber/Manufacturing Method of Regenerated Blade Rubber>

A regeneration method of a used blade rubber and a manufacturing method of regenerated blade rubber according to the present disclosure will be described with reference to Figs. 4A to 4C in a case using a wiper blade including the blade rubber. The regeneration method of blade rubber and the manufacturing method of regenerated blade rubber include a step of regenerating a used blade rubber in which cleaning performance (wiping performance) is deteriorated as a result of use and recovering the cleaning performance. Note that the regeneration method of a used blade rubber and the manufacturing method of regenerated blade rubber may be simply referred to as "regeneration method and the like of blade rubber" below.

As a step of preparing blade rubber to be regenerated, a used blade rubber is prepared. For example, a wiper blade provided with used blade rubber may be used as it is for regeneration, or the blade rubber may be removed from the wiper blade and regenerated.

As illustrated in Fig. 4A, the used blade rubber may have chipping 141 or wear 142 in a contact region due to rubbing with the wiping target surface of the wiping target object. Therefore, the wiping performance may be deteriorated due to the chipping 141 and the wear 142. Thus, as illustrated in Fig. 4B, the tip portion including the contact region of the blade rubber is cut by a predetermined length (dotted line part 143). In a cutting step, it is preferable to cut the tip of the lip portion 3 to obtain a cut surface substantially parallel to the tip surface 7.

One aspect of the regeneration method and the like of blade rubber includes a cutting step of entering a cutting blade into the blade rubber from the side portion of the blade rubber at one end portion A (for example, one end in the longitudinal direction) of the blade rubber, and relatively moving the cutting blade with respect to the blade rubber toward the other end portion B of the blade rubber to remove at least a part of the contact portion. The length for cutting only needs to be a length by which chipping or a worn part is reliably cut, and it is preferable to shorten the cutting length in order to enable a plurality of number of times of regeneration and use. Regeneration and use a plurality of number of times are preferable because effective utilization of resources can be further promoted. Cutting conditions including the cutting length will be described later in detail.

As illustrated in Fig. 4C, in the blade rubber (regenerated blade rubber) from which the tip portion (lip tip part) of the blade rubber, which is at least a part of the contact portion with the wiping target object, has been removed by the cutting step, chipping and the worn part are removed by the cutting step. As a result, the accuracy of the contact region with the cleaning target member is recovered to a degree equivalent to that of a new blade rubber, and the regenerated blade rubber having no inferiority in wiping performance from the new blade rubber can be obtained.

Further, the blade rubber can be regenerated a plurality of number of times by repeating the above regeneration method and the like.

As one aspect of the regeneration method and the like of blade rubber according to the present disclosure, there is preferably a method including at least a step of clamping at least a part of the blade rubber, entering the cutting blade into the blade rubber from the side portion of the tip of the blade rubber at the end portion A which is one end portion of the blade rubber, and then relatively moving the cutting blade toward the other end portion B to cut the tip of the blade rubber. A method of clamping the blade rubber is not particularly limited as long as the blade rubber is stably held against the entrance of the cutting blade, and it is preferable to clamp a part close to the cutting blade in order to improve the stability of the blade rubber when the cutting blade is entered into the blade rubber.

A direction in which the cutting blade is entered into the blade rubber and moves is not particularly limited, and may be the longitudinal direction or the lateral direction. In order to obtain the shape accuracy of an edge portion that has an influence on the cleaning performance, it is preferable that the blade portion moves in the longitudinal direction that is a

vertical direction of the edge portion to remove the contact portion with the cleaning target member. That is, the relative movement is preferably movement in the longitudinal direction of the blade rubber. For example, the cutting blade preferably moves to cut the first edge 8, the second edge 9, and the tip surface 7. That is, at least a part of the contact portion to be removed preferably includes the tip surface and a tip-side edge of the blade rubber.

One aspect of the regeneration device that can be used in the regeneration method and the like according to the above aspect exemplifies a regeneration device including

a blade portion that removes at least a part of a contact portion in the longitudinal direction as a cutting blade,
a clamping member of blade rubber,
a biasing member that contacts an end portion B of the blade rubber and biases the blade rubber in a direction of an end portion A, and
a pressing member that presses a tip including the contact portion of the blade rubber in a lateral direction of the blade rubber to suppress elastic deformation due to movement of the blade portion.

The clamping member clamps at least a part of the blade rubber from both side portions of the blade rubber in cross-sectional view in a direction perpendicular to a longitudinal direction of the blade rubber. In addition, the clamping member is disposed at a position where at least a part of the blade rubber into which the blade portion enters is able to be clamped, and a position of the clamping member with respect to the blade rubber is fixed. The pressing member presses the blade rubber prior to the relative movement of the blade portion from the end portion A to the end portion B.

In order to more reliably prevent generation of a vibration shape on the cut surface and obtain regenerated blade rubber having wiping performance comparable to that of a new blade rubber, it is preferable to regenerate the blade rubber according to the present disclosure in which E' and the breaking stress are optimized as described above, as the blade rubber, by using the above-described regeneration device 20.

The regeneration device will be described with reference to Fig. 5, Figs. 6A and 6B, and Figs. 7A and 7B. Fig. 5 is a schematic view illustrating an external appearance of the regeneration device 20 of blade rubber. Figs. 6A and 6B are schematic views for describing a cutting unit 30 including the blade portion and the cutting movement. Fig. 7A is a cross-sectional view of the cutting unit 30 and a clamping member 21 in blade rubber lateral direction, and Fig. 7B is an enlarged view of the vicinity of a blade portion 31.

The regeneration device 20 of blade rubber includes the blade portion 31 as a cutting blade, and the clamping member 21 as blade rubber fixing member that fixes blade rubber 100.

The clamping member 21 fixes the blade rubber by clamping the blade rubber from the lateral direction of the blade rubber. In order to improve the stability of the blade rubber when the blade portion 31 is entered into the blade rubber, it is preferable to clamp a part close to the blade portion. Therefore, the clamping member 21 preferably clamps the lip portion 3, for example. Specifically, for example, as illustrated in Fig. 3B, the clamping member 21 preferably clamps the first side surface 5 and the second side surface 6 of the lip portion 3. Here, the clamping member 21 clamps the lip portion 3 from both sides of the lip portion 3 in cross-sectional view in the direction perpendicular to the longitudinal direction of the blade rubber. In Fig. 5, the clamping member 21 is fixed on a flat plate 16 by a holding member 15 having an L-shaped cross section from the longitudinal direction of the blade rubber according to the present disclosure.

As illustrated in Figs. 6A and 6B and Figs. 7A and 7B, the clamping member 21 is disposed at a position where at least a part (end portion A) where the blade portion 31 enters into the lip portion 3 can be clamped. In Fig. 6B, the clamping member 21 clamps the entire region of the lip portion 3 in the longitudinal direction from both side portions, the entire region including a part into which the blade portion 31 enters. The position of the clamping member 21 with respect to the blade rubber is fixed.

The regeneration device 20 of blade rubber includes the blade portion 31 for cutting the tip of the lip portion 3, which is at least a part of the contact portion, in the longitudinal direction of the blade rubber 100. For example, as illustrated in Fig. 5 and Figs. 6A and 6B, the regeneration device 20 of blade rubber may include a cutting unit 30, and the cutting unit 30 may include a blade portion 31 (not illustrated in Fig. 5).

The cutting unit 30 is movable along the blade rubber 100. The moving direction is not limited, and it is preferable to move along the longitudinal direction because the cutting force can be increased by reducing the area of the blade rubber in contact with the blade portion, and the cut surface is highly accurate. In Fig. 5, the cutting unit 30 may move along a rail 17 that guides the movement. For example, the cutting unit 30 is manually movable by a handle 32 in Fig. 5, but may be able to be driven by an electric cylinder, a motor, or the like instead of a manual manner. Note that the cutting unit 30 and the clamping member 21 may not be in contact with each other so that the cutting unit 30 easily moves.

Figs. 6A and 6B are cross-sectional views from the device top of the cutting unit 30 in the regeneration device 20 of blade rubber. Fig. 6A is an enlarged view of the periphery of the cutting unit 30, and Fig. 6B is an overall view including the clamping member 21. The cutting unit 30 including the blade portion 31 moves from the end portion A to the end portion B direction in the direction of the arrow in the drawing along the longitudinal direction of the blade rubber 100.

The blade portion 31 is entered into the lip portion 3 from the side portion of the tip of the lip portion 3 at the end

portion A which is one end portion of the blade rubber 100 in the longitudinal direction, and is relatively moved toward the end portion B which is the other end portion in the longitudinal direction to cut a part of the tip of the lip portion 3. By performing cutting in this manner, the worn and deteriorated part can be removed to obtain regenerated blade rubber.

Although the illustrated regeneration device 20 has an aspect in which the blade portion 31 (cutting unit 30) moves, it is sufficient that the blade portion 31 can relatively move from the end portion A to the end portion B. That is, an aspect in which the cutting unit 30 including the blade portion 31 is fixed, and the clamping member 21 to which the blade rubber 100 is fixed moves may be made. Further, as illustrated in Fig. 6B, the regeneration device 20 preferably includes a biasing member 41 that contacts the side portion of the tip of the lip portion 3 at the end portion B of the lip portion 3 and biases the lip portion in the direction of the end portion A.

The biasing member 41 is, for example, a plate-like member, and is inserted into a gap between the clamping members 21. The biasing member 41 presses the end portion B of the lip portion in the direction of the end portion A from the end portion of the clamping member 21 by an elastic body 42 such as a spring. By providing the biasing member 41, elastic deformation of the end portion of the lip portion when the blade portion 31 approaches the side surface of the end portion B of the blade rubber can be more reliably prevented. As a result, it is possible to prevent the shift of the blade portion in the advancing direction, and it is possible to more reliably prevent the generation of the vibration shape on the cut surface.

In addition, the regeneration device 20 preferably includes a pressing member that presses the tip including the contact portion of the blade rubber in the lateral direction of the blade rubber to suppress the blade rubber due to the movement of the blade portion. More specifically, it is preferable to include the pressing member that presses the tip including the contact portion of the blade rubber in the lateral direction of the blade rubber and in a thickness direction of the blade portion (direction perpendicular to a blade crossing direction), and more preferably, the pressing member is configured to press the tip surface 7. By providing such a pressing member, it is possible to more reliably prevent elastic deformation of the lip portion in the process in which the blade portion 31 moves from the end portion A toward the end portion B. Specifically, as illustrated in Fig. 5 and Figs. 7A and 7B, the regeneration device 20 preferably includes a pressing member 51 that presses the tip of the lip portion 3 toward a direction of the base portion 1 of the blade rubber.

Such a pressing member 51 can more reliably prevent the advancing direction of the blade portion from shifting upward as indicated by a dotted line in Fig. 9A when the blade portion is entered from the side surface on one end side (end portion A) of the blade rubber and is moved toward the other end side of the blade rubber in the longitudinal direction while advancing cutting the tip of the blade rubber. Note that it is considered that the upward shift of the blade portion in the advancing direction described above is because a force applied to the blade portion to advance the blade portion is likely to move upward due to the thin thickness of the cutting target part of the blade rubber.

Further, the pressing member 51 preferably presses the tip of the lip portion 3 toward the base portion 1 prior to the relative movement of the blade portion 31 from the end portion A to the end portion B. For example, as illustrated in Figs. 5 and 7A, the pressing member 51 is provided in the cutting unit 30 and can move in accordance with the movement of the blade portion 31.

The present inventors consider the reason why the above-described regeneration device 20 of blade rubber can suppress deformation of the cut surface of the lip portion 3 and obtain a more accurate regenerated blade rubber as follows.

First, suppression of deformation at an early stage of cutting will be described. The regeneration device 20 includes the clamping member 21 that clamps the lip portion 3. The clamping member 21 is disposed at a position where clamping at least a part where the blade portion 31 enters into the blade rubber is possible. The position of the clamping member with respect to the blade rubber is preferably fixed. That is, in the regeneration device 20, the clamping member 21 preferably clamps the blade rubber without moving with respect to the blade rubber even by the movement of the blade portion 31.

As described above, it is considered that the elastic deformation of the blade rubber due to the pressure when the blade portion 31 is entered into the blade rubber is suppressed by clamping the part of the lip portion 3 into which the blade portion 31 enters. Therefore, in the blade rubber, it is possible to suppress an occurrence of a situation in which the end portion on the entrance segment side of the blade portion 31 after cutting has an R surface as a macro shape, and as a result, it is possible to more reliably prevent the generation of the vibration shape on the cut surface.

That is, by clamping the lip portion 3 with the clamping member, the entrance of the blade portion into the blade rubber becomes stable. As a more preferable aspect, in a case where the clamping member 21 that clamps the lip portion 3 from both side surfaces is provided, it is considered that excessive elastic deformation is suppressed and pressure is uniformly applied to the lip portion 3 as illustrated in Fig. 8. As a result, it is considered that the advancing direction of the blade portion 31 in the lip portion 3 is more stable as indicated by a broken line in Fig. 8, and it is possible to more reliably suppress the generation of the vibration shape on the cut surface.

Note that in order to more reliably suppress deformation of the entrance segment of the blade portion 31 in the lip portion 3, the clamping member 21 only needs to clamp at least a part into which the blade portion 31 enters. As illustrated in Figs. 6A and 6B, the clamping member 21 may clamp the lip portion 3 over the entire region of the lip portion 3 in the

longitudinal direction.

Further, the regeneration device 20 preferably includes the pressing member 51 that presses the tip of the lip portion 3 toward the base portion 1 prior to the relative movement of the blade portion 31 from the end portion A to the end portion B. Since the lip portion 3 can be pressed by such a pressing member 51 at a position immediately before the blade portion 31 is cut, it is considered that the progress of the blade portion is further stabilized, and the elastic deformation of the lip portion 3 due to flip-up of a cut piece by the blade portion 31 can be further suppressed. That is, the pressing member 51 can prevent the vibration (chattering) of the blade portion 31 due to the movement of the blade portion 31 and the shift of the blade rubber toward the tip side in the advancing direction. As a result, the advancing direction of cutting of the blade portion 31 is further stabilized, and it is possible to more reliably prevent the generation of the vibration shape on the cut surface.

That is, as illustrated in Fig. 9B, it is preferable to move the pressing member 51 together with the blade portion 31 in the arrow direction while pressing the lip portion 3 in the base portion 1 direction, prior to the blade portion 31. According to such a regeneration device, the elastic deformation of the lip portion 3 due to the movement of the blade portion 31 is suppressed by the pressing member. As a result, it is considered that the lip portion 3 is less likely to be elastically deformed even by the progress of the blade portion 31, and the cut surface can be a smooth surface having no vibration shape as indicated by a broken line in Fig. 9B. For example, the pressing member 51 and the blade portion 31 can be configured to move while maintaining a constant distance between the tip of the blade portion 31 and the pressing member 51.

Further, in the regeneration device 20, the biasing member 41 that contacts the side portion of the end portion B of the lip portion 3 and biases the lip portion 3 in the direction of the end portion A can more reliably suppress the extension due to the elastic deformation on the tip side of the lip portion at the end portion B when the blade portion 31 reaches the vicinity of the end portion B. As a result, it is possible to more reliably prevent the generation of the vibration shape on the cut surface.

That is, as illustrated in Fig. 10, since the biasing member 41 is provided, it is possible to more reliably suppress the extension of the lip portion 3 when the blade portion 31 reaches the rear end portion of the lip portion 3. Therefore, as indicated by a broken line in Fig. 10, the cut surface can be a smooth surface in which no vibration shape is generated.

In order to more reliably prevent elastic deformation of the rear end portion of the lip portion 3 accompanying the progress of the blade portion 31 in the cutting step, it is more preferable to include the pressing member 51 and the biasing member 41.

As described above, when the regeneration device including the clamping member, the pressing member, and the biasing member is used for regenerating the blade rubber having a specific storage elastic modulus and a specific breaking stress according to the present disclosure, it is possible to more reliably suppress the elastic deformation of the lip portion from the blade portion entering into the lip portion to the completion of cutting, and it is possible to more reliably prevent the generation of the vibration shape on the cut surface of the lip portion. In addition, it is possible to more reliably prevent the cut surface from forming an S-shaped curve as illustrated in Fig. 11 as the macro shape.

Each configuration of the regeneration device 20 of blade rubber will be described below in detail.

The regeneration device 20 includes the blade portion 31. The cutting blade constituting the blade portion 31 only needs to be able to cut the lip portion by the relative movement, and may be a flat blade or a round blade.

As illustrated in Fig. 6B, in a case where a flat blade is used as the cutting blade constituting the blade portion 31, an angle (blade angle $\theta$A) formed by a blade with respect to the lateral direction of the lip portion 3 of the blade is not particularly limited, and the blade portion 31 only needs to be provided in the regeneration device 20 such that the angle is preferably 20 to 70°, more preferably 30 to 60°, and further preferably 40 to 50°. Fig. 6A is an example in which the angle $\theta$A of the blade is 45°.

In cross-sectional view of the regeneration device 20 in the longitudinal direction of the blade rubber, an angle $\theta$B (not illustrated) formed by the longitudinal direction (for example, a device horizontal plane) of the lip portion 3 and a direction that is perpendicular to the blade crossing direction of the blade and is parallel to a blade body is preferably 0 to 10°, more preferably 2 to 8°, and further preferably 3 to 7° by using, as +, a case where a blade edge is directed toward the base portion 1 side. The angle $\theta$B being in the above range means that the blade is slightly inclined toward the base portion 1 side of the blade rubber. As a result, it is easy to release the cut piece to the side opposite to the advancing direction of the blade portion.

The cutting blade may be a double-edged blade or a single-edged blade. In the regeneration device 20 illustrated in Fig. 5 and the like, a double-edged blade is used as the blade portion 31. A blade thickness is also not particularly limited, and is preferably 0.05 to 0.50 mm, and more preferably 0.10 to 0.30 mm. A tip angle (blade edge angle) of the blade is also not particularly limited, and is preferably 15 to 55°, more preferably 25 to 50°, and further preferably 35 to 45°. Within the above range, it is easy to appropriately cut the lip portion. The illustrated regeneration device 20 is an example of 45°.

The blade portion 31 only needs to be fixed to the regeneration device 20 (cutting unit 30) with a force by which the angle of the cutting blade does not change during cutting. For example, fastening only needs to be performed with a bolt or the like. The blade portion 31 may be fixed on one side as illustrated in Fig. 6A. The blade portion 31 may be fixed on both side portions across the lip portion when the blade portion 31 is passed over, for example, the left and right cutting units 30

in Fig. 6A and the regeneration device 20 is viewed from the side (for example, the upper side of the device) of the lip portion tip portion. As a result, the cutting accuracy is more improved.

A feeding speed (that is, the speed of the relative movement) of the cutting blade in the regeneration device 20 is not particularly limited as long as the feeding speed is within a range in which the lip portion 3 can be appropriately cut, and is preferably 500 to 5000 mm/sec, more preferably 800 to 2000 mm/sec, and further preferably 900 to 1500 mm/sec.

A slice width of the lip portion 3 cut by the blade portion 31 is also not particularly limited, and corresponds to the size of the lip portion of the blade rubber to be used. As the slice width (length of the lip portion in the lateral direction of the blade rubber in a part to be cut (length between the first side surface 5 and the second side surface 6)), ranges of 0.1 to 5.0 mm, 0.2 to 2.0 mm, 0.3 to 1.0 mm, and the like are preferably exemplified. The material of the blade portion 31 is not particularly limited, and a known material can be appropriately used in accordance with the blade rubber to be cut. For example, stainless steel or iron may be used.

The regeneration device 20 preferably includes the clamping member 21 that clamps at least a part of the lip portion 3 from both side portions of the lip portion 3. The clamping member 21 clamps and fixes the lip portion 3, and suppresses elastic deformation due to entrance of the blade portion. The clamping member 21 only needs to be disposed at a position where clamping a part of the lip portion into which the blade portion 31 enters is possible. The part into which the blade portion enters means a part at which elastic deformation of the lip portion due to entrance of the blade portion can be suppressed by being clamped in the vicinity of a contact point between the blade portion and the lip portion. For example, the part is in the vicinity of the position where the blade portion enters, and is a part that elastically deforms due to the entrance of the blade portion in a case where both side portions of the lip portion are not clamped.

The clamping member 21 may clamp the entire lip portion. For example, as illustrated in Figs. 6A and 6B, the clamping member 21 can clamp and fix the entire region of the lip portion in the longitudinal direction from both side portions by a member that is sufficiently longer than the length of the blade rubber 100 in the longitudinal direction. Furthermore, for example, the clamping member 21 clamps the base portion 1 side from the position where the blade portion 31 enters. The material of the clamping member 21 is not particularly limited, and a steel material such as pre-hardened steel and a known material such as stainless steel or aluminum can be adopted.

A pressing force when the lip portion 3 is clamped and fixed by the clamping member 21 is not particularly limited, and can be appropriately changed in accordance with the material of the blade rubber and the like. The lip portion 3 only needs to be fixed with a force that enables suppression of elastic deformation due to the entrance of the blade portion 31. In addition, the lip portion only needs to be fixed with a force that does not unnecessarily deform due to clamping. A fixing method is not particularly limited, and a known method such as fastening with a bolt can be adopted. For example, as a fastening force of the bolt when the lip portion is clamped by fastening the clamping member 21 with the bolt, ranges of 5.0 to 50.0 N/m, 10.0 to 30.0 N/m, and 12.0 to 20.0 N/m are preferably exemplified. For example, the clamping member 21 preferably clamps a position corresponding to the part into which the blade portion enters, with the fastening force.

Fig. 12 is a further enlarged view of the periphery of the tip of the lip portion 3 in Fig. 7B which is a cross-sectional view of the cutting unit 30 and the clamping member 21 in the blade rubber lateral direction. A part where the lip portion 3 is clamped by the clamping member 21 is set as a clamping part, and a length of a part where the tip of the lip portion 3 protrudes from the clamping part to the outside of the clamping member 21 is set as a protruding length A of the lip portion.

From the viewpoint of more easily suppressing elastic deformation of the lip portion 3, the protruding length A of the lip portion is preferably 0.10 to 1.00 mm, more preferably 0.20 to 0.50 mm, and further preferably 0.30 to 0.40 mm.

Further, as illustrated in Fig. 12, a length (shortest distance) from the clamping part of the lip portion by the clamping member 21 to the tip of the blade is set as a length B. From the viewpoint of more easily suppressing elastic deformation of the lip portion 3, B is preferably 0.200 mm or less, more preferably 0.150 mm or less, and further preferably 0.130 mm or less. The lower limit is preferably as small as possible, and a length exceeding 0.000 mm is desirable in order to prevent interference between the blade and the clamping part. As the length B, ranges of more than 0.000 mm and 0.200 mm or less, more than 0.000 mm and 0.150 mm or less, and more than 0.000 mm and 0.130 mm or less are preferably exemplified.

In addition, from the viewpoint of more easily suppressing elastic deformation of the lip portion 3, the value of B/A is preferably 0.10 to 0.55, more preferably 0.20 to 0.45, and further preferably 0.30 to 0.40.

Further, the cutting thickness of the tip of the lip portion 3 corresponding to A-B in Fig. 12 (the length of the blade rubber in a base portion-lip portion tip direction) only needs to be appropriately changed in accordance with the purpose of regeneration, the length of the lip portion before regeneration, and the degree of deterioration of the lip portion, and is not particularly limited. From the viewpoint of repeated use by regeneration, it is preferable that the cutting thickness is thin because the number of times of repeated regeneration being possible increases. By making the cutting thickness thin and repeatedly performing regeneration and using the result of the regeneration a plurality of number of times, it is possible to more promote the effective use of resources. The cutting thickness is preferably 0.05 to 1.00 mm, and more preferably 0.10 to 0.50 mm.

The pressing member 51 is a member that presses the tip of the lip portion 3 and suppresses elastic deformation due to the movement of the blade portion. The regeneration device 20 includes the pressing member 51 that presses the tip

of the lip portion 3 toward the base portion 1 prior to the relative movement of the blade portion 31 from the end portion A to the end portion B. The pressing member 51 is not particularly limited as long as the pressing member can press the lip portion prior to the relative movement of the blade portion 31. The pressing force may be any force as long as the elastic deformation of the lip portion 3 due to the flip-up of the cut piece can be suppressed.

For example, an aspect in which a member having a predetermined degree of hardness is provided at a position facing the tip of the lip portion 3 in contact with the tip is exemplified. That is, the pressing member 51 preferably moves in contact with the tip of the lip portion 3, and is preferably provided at a position facing the tip of the lip portion 3. In this manner, the pressing force can be appropriately changed in accordance with the protruding length A of the lip portion 3. The pressing member 51 may or may not be biased by an elastic body such as a spring in the direction of the base portion 1 with respect to the lip portion 3.

When the blade portion is moved in the longitudinal direction of the blade rubber, the cut pieces of the lip portion are fed to spaces above and behind the blade portion as the cutting advances. It is preferable that the pressing member 51 weakens or releases the pressing above and behind the tip of the blade portion 31 in the relative movement of the blade portion 31 so that the cut piece of the lip portion is filled and the progress of the cutter for regeneration is not hindered. Examples of the degree of weakening the pressing include a method of weakening the force to a pressing force that does not hinder the progress of the blade portion 31.

From the viewpoint of regenerating the blade rubber with higher accuracy, it is preferable that the pressing member 51 releases the pressing so that the cut piece can be easily fed to the rear side of the blade.

For example, as illustrated in Fig. 5, the pressing member 51 is preferably a disc-shaped member. The pressing member 51 may be fixed to or pivotally supported by the cutting unit 30, and is preferably pivotally supported from the viewpoint of facilitating pressing with a constant force. Examples of an aspect of the pressing member 51 fixed to the cutting unit 30 include a disc-shaped member and a member that has a convex shape having R in the lip portion 3 direction. A method of axial support is also not particularly limited, and a known method using a bearing or the like can be adopted.

From the viewpoint of weakening or easily releasing the pressing above and behind the tip of the blade portion 31, the pressing member 51 is preferably a member that moves (synchronously) in accordance with the movement of the blade portion 31 by, for example, providing the pressing member 51 in the cutting unit 30 together with the blade portion 31 as illustrated in Fig. 5. It is preferable to move while keeping a distance between the tip of the blade portion 31 and a pressing part by the pressing member 51 constant.

In the illustrated aspect, the pressing member 51 is a disc-shaped roller member that is pivotally supported by the cutting unit 30 and rotates in contact with the clamping member 21 with the relative movement of the cutting unit 30. Since the pressing member 51 rotates in contact with the clamping member 21, the pressing position and the pressing force can be easily kept constant, which is preferable. In addition, the pressing force can be controlled by the hardness of the pressing member 51 and the protruding length A of the lip portion 3.

As illustrated in Fig. 9B, a distance between a position corresponding to the blade edge of the blade portion 31 and a contact point between the pressing member 51 and the lip portion 3 in the longitudinal direction of the tip of the lip portion 3 is defined as X. X is preferably 1 to 30 mm, more preferably 5 to 20 mm, and still more preferably 10 to 18 mm. That is, it is preferable that the pressing member 51 presses the lip portion prior to the movement of the blade portion 31 by the distance of X. Within the above range, the elastic deformation of the lip portion due to the flip-up of the cut piece can be more easily suppressed.

In addition, in a case where the pressing member 51 is a disc-shaped member, as illustrated in Fig. 9B, a distance between the center of the disc shape and the horizontal plane of the lip portion 3 is set as Y. Y is preferably 5.0 to 100.0 mm, more preferably 10.0 to 70.0 mm, and further preferably 20.0 to 50.0 mm.

When X and Y are the above upper limit or less, it is easier to prevent the flip-up of the cut piece. When X and Y are the above lower limit or more, the cutting resistance is easily maintained favorably.

The value of X/Y is preferably 0.40 to 0.80, more preferably 0.50 to 0.70, and further preferably 0.55 to 0.65.

For example, the lip portion may be pressed so that the value of the radius-Y of the disc-shaped member is preferably 0.01 to 0.2 mm, and more preferably 0.05 to 0.15 mm. The value of the radius-Y of the disc-shaped member indicates the degree of deformation of the pressing member due to pressing.

The width (length of the lip portion 3 in the lateral direction) of the pressing member 51 is not particularly limited as long as the lip portion 3 can be pressed. Ranges of 1 to 100 mm, 2 to 50 mm, and 5 to 20 mm are preferably exemplified.

The hardness of the pressing member 51 is not particularly limited as long as the lip portion 3 can be pressed. The Wallace hardness of the pressing member 51 is preferably 70 to 100 degrees, and more preferably 75 to 80 degrees. Within the above range, the pressing member is easily deformed appropriately, the flip-up suppressing effect is further improved, and an excessive increase in cutting resistance can also be suppressed.

The Wallace hardness can be measured by using, for example, a Wallace Microhardness tester (manufactured by Wallace Instruments) as a measuring instrument according to Japanese Industrial Standard (JIS) K6253-2: 2012.

The material of the pressing member 51 is also not particularly limited, and a known material can be used. Examples of the material include rubber materials such as polyurethane rubber (ester-based polyurethanes, ether-based

polyurethanes, and the like), silicone rubber, fluorocarbon rubber, and natural rubber; and metals such as aluminum and stainless steel. From the viewpoint of satisfying the above-described Wallace hardness, a rubber material such as an ester-based polyurethane is preferable.

The regeneration device 20 preferably includes the biasing member 41 that contacts the side portion of the end portion B of the lip portion 3 and biases the lip portion in the direction of the end portion A. The biasing member 41 only needs to bias the end portion B to such an extent that elastic deformation in the longitudinal direction of the lip portion 3 (in particular, elastic deformation on the tip side of the lip portion) can be suppressed. For example, the biasing member may have a shape capable of biasing the clamping part by the clamping member 21 and a part from the clamping part to the tip side of the lip portion 3 (Fig. 10), or may have a shape capable of biasing the entire surface of the end portion B of the lip portion. The biasing member 41 preferably has a shape capable of biasing the clamping part and a part from the clamping part to the tip side of the lip portion 3.

Fig. 13 is a cross-sectional view in the longitudinal direction of the lip portion 3 at the position of the lip portion 3 clamped between the clamping members 21. The biasing member 41 is clamped between the clamping members 21 which clamp the lip portion 3, and biases the end portion B in the direction of the end portion A (the same applies to Fig. 11B). Further, the biasing member 41 itself may be an elastic member. It is preferable that the biasing member 41 is in a state of being not fixed to the clamping member 21, that is, the biasing member 41 is in a state of being loosely fitted to the clamping member 21.

For example, as illustrated in Fig. 14A, the biasing member 41 is inserted between the clamping members 21 through a hole provided in the holding member 15. As illustrated in Fig. 14B, a spring is inserted as the elastic member 42 so that the biasing member 41 can bias the end portion B, and the spring is pressed and fixed by a lid 43, whereby the end portion B is biased by the biasing member 41.

The shape of the biasing member 41 is not particularly limited, and is, for example, a plate-like member as illustrated in Fig. 10. The plate shape is easily applied between the clamping members 21. As the plate-like member, for example, a shim plate or the like can be used in accordance with the size of the gap between the clamping members 21. The shim plate is not particularly limited, and a known metal such as an iron-based metal, a stainless-based metal, or a copper-based metal can be used. Examples thereof include a cold-rolled steel sheet.

The thickness of the shim plate only needs to be appropriately changed in consideration of the thickness of the lip portion 3 and the gap between the clamping members 21. Examples thereof include ranges of 0.1 to 2.0 mm and 0.2 to 1.0 mm. The length and height of the shim plate are also not particularly limited, and a shim plate corresponding to the size of the lip portion 3 and the size of the device only needs to be used.

The biasing member 41 only needs to be able to bias the end portion B to such an extent that elastic deformation of the lip portion 3 in the longitudinal direction can be suppressed. For example, in a case where a spring is used as the biasing member 41 itself or the elastic body for biasing the biasing member 41, a spring in which an allowable load is in a range of preferably 10 to 100 N, and more preferably 20 to 60 N may be used. In addition, the spring constant is preferably 1.0 to 10.0 N/mm, and more preferably 2.0 to 5.0 N/mm.

Another aspect of the present disclosure relates to the manufacturing method of regenerated blade rubber. The manufacturing method of regenerated blade rubber includes a step of obtaining blade rubber regenerated by the regeneration method.

## Examples

The present invention will be specifically described below by using examples. Note that the present invention is not limited to the following examples. In the following formulations, parts are on a mass basis unless otherwise specified.

### <Preparation of Regeneration Device A>

As a regeneration device A of blade rubber used in examples, the regeneration device of blade rubber according to at least one aspect of the present disclosure described with reference to Figs. 5, 6, 7, and 12 to 14 was prepared. More specifically, the following regeneration device of blade rubber was prepared. A length between the holding members 15 was set to 1000 mm.

### (Blade Portion 31)

Fixing to the cutting unit 30 was performed at the following angles θA and θB using the following blades. Type of blade: High-speed steel (SKH material) (product name • material), double-edged flat blade, tip angle (blade edge angle) 45°, 3 times polishing (DLC coated product), blade thickness 0.25 mm

Angle θA of blade: 45°

Angle of blade with respect to jig horizontal plane (formed angle θB): 5°
Pressing of blade: As illustrated in Fig. 7B, the blade was clamped between the cutting units 30, and both side portions of the blade were fastened with bolts.

(Clamping Member 21)

The clamping member was made as follows, and the blade rubber was fixed in accordance with the blade portion 31 to have the following slice width, protruding length A, and length B.

Material of clamping member 21: free-cutting pre-hardened steel (product number: NAK55) Pressing force: 14.7 N/m (fastened and clamped by M3 bolt with fastening force)
Slice width: 0.7 mm
Protruding length A: 0.35 mm
Length B (length from clamping part to tip of blade): 0.125 mm

(Pressing Member 51)

As the pressing member 51, a member produced by processing a standard urethane sheet (product number: UTM, manufactured by MISUMI Co., Ltd.) made of ester-based polyurethane and having a Wallace hardness of 80 degrees into a disc shape having a diameter of 57.0 mm and a width of 10 mm was used. The pressing member 51 was fixed to the cutting unit 30 at a position where the distance X was 17 mm and the distance Y was 28.4 mm illustrated in Fig. 9B. In addition, the pressing member 51 is pivotally supported by the cutting unit 30 to be rotatable by a bearing cam follower (product number: CFUA3-10, manufactured by MISUMI Co., Ltd). The pressing member 51 was brought into contact with the lip portion (value of radius-Y of the disc = 0.1 mm), and was fixed so that the pressing member 51 was rotatable by the movement of the cutting unit 30. With such contact, the tip of the lip portion protruding from the clamping member 21 by the protruding length A was pressed by the pressing member 51. In this manner, the pressing member 51 is configured to be able to press the lip portion by the distance of X prior to the movement of the blade.

(Biasing Member 41)

As the biasing member 41, a shim plate made of a cold-rolled steel plate having a length of 50 mm, a height of 10 mm, and a thickness of 0.6 mm was passed between the clamping members 21 as illustrated in Figs. 5 and 6B, and the end portion B of the blade rubber was biased in the end portion A direction by using the spring 42 and the lid 43. As the spring 42, a spring (model No. WL18-35, manufactured by MISUMI Co., Ltd.) having a spring constant of 2.9 N/mm and an allowable load of 30 to 50 N was used.

<Preparation of Regeneration Device B>

A regeneration device B having the same configuration as the regeneration device A except that the biasing member 41 was not provided was prepared.

<Preparation of Regeneration Device C>

A regeneration device C having the same configuration as the regeneration device A except that the biasing member 41 and the pressing member 51 were not provided was prepared.

<Preparation of Regeneration Device D>

A regeneration device D having the same configuration as the regeneration device A except that the biasing member 41 and the pressing member 51 were not provided and the pressing force of the clamping member was set to 0.0 N/m was prepared.
An outline of the regeneration devices A to D is summarized in the following Table 1.

[Table 1]

Table 1.

| | | Regeneration device | | | |
|---|---|---|---|---|---|
| | | A | B | C | D |
| Clamping member | Pressing force (N/m) | 14.7 | 14.7 | 14.7 | 0.0 |
| | Protruding length A (mm) | 0.35 | 0.35 | 0.35 | 0.35 |
| | Length B (mm) | 0.125 | 0.125 | 0.125 | 0.125 |
| Pressing member | Presence or absence | presence | presence | absence | absence |
| | Distance X (mm) | 17.0 | 17.0 | - | - |
| | DistanceY (mm) | 28.4 | 28.4 | - | - |
| Biasing member | Presence or absence | presence | presence | absence | absence |

(Example 1)

<Production of Blade Rubber 1>

219.0 g of 4,4'-diphenylmethane diisocyanate (trade name: Millionate MT, manufactured by Tosoh Corporation) (referred to as 4,4'-MDI below, and is simply referred to as "MDI" in the table), 210.0 g of tris(phenyl isocyanate) thiophosphate (trade name: Ultimate Super CAll, manufactured by TOHO Chemical Industry Co., Ltd.) (referred to as TPTI below) as a trifunctional or higher polyfunctional isocyanate, and 571.0 g of a polybutylene adipate polyester polyol (trade name: NIPPOLAN 3027, manufactured by Tosoh Corporation) having a number average molecular weight of 2500 (referred to as PBA2500 below) were caused to react with each other at 80°C for 3 hours to obtain a prepolymer.

Subsequently, components in the following Table 2 were mixed to prepare a curing agent.

[Table 2]

Table 2

| Material | Blending amount |
|---|---|
| Trimethylolpropane (manufactured by Tokyo Chemical Industry Co., Ltd) (* referred to as "TMP" below.) as trifunctional or higher polyfunctional alcohol | 42.9 g |
| Polyhexylene adipate polyester polyol (trade name: NIPPOLAN 164, manufactured by Tosoh Corporation, number average molecular weight of 1000) (* referred to as "PHA1000" below.) as diol | 243.0g |
| Polycat 46 (trade name, manufactured by Air Products and Chemicals, Inc.) | 0.03g |
| 2-[{2-(dimethylamino)ethyl}methylamino]ethanol (trade name: TOYOCAT-RX5, manufactured by Tosoh Corporation) (* referred to as "RX5" below.) | 1.00g |

This curing agent was added to the above-described prepolymer and mixed to obtain a raw material composition. This raw material composition was injected into a molding die for blade rubber, and cured at a temperature of 130°C for 2 minutes. Thereafter, demolding was performed to obtain a polyurethane molded body. Note that a release agent A was applied in advance into the molding die for blade rubber so that chipping or the like did not occur at the edge of the lip portion at the time of demolding. The release agent A is a mixture of materials described in the following Table 3.

[Table 3]

Table 3

| Material | Blending amount |
|---|---|
| "ELEMENT 14 PDMS 1000-JC" (trade name, manufactured by Momentive Performance Materials, Inc.) | 5.06g |
| "ELEMENT 14 PDMS 10K-JC" (trade name, manufactured by Momentive Performance Materials, Inc.) | 6.19g |
| "SR1000" (trade name, manufactured by Momentive Performance Materials, Inc.) | 3.75g |
| "EXXSOL DSP145/160" (trade name, manufactured by ANDOH PARACHEMIE CO., LTD.) | 85g |

The tip of the lip portion of the polyurethane molded body was cut to obtain blade rubber 1 according to the present example. The length of the blade rubber in the longitudinal direction was set to 650 mm. Further, the thickness of the neck portion was set to 0.22 mm and the thickness of the lip portion was set to 0.7 mm. The physical properties and the like of the obtained blade rubber 1 were evaluated by the following method.

[Evaluation 1-1; Measuring Method of Storage Elastic Modulus E']

The storage elastic modulus E' was measured with temperature frequency dispersion using a dynamic viscoelasticity device, and a master curve was created and calculated based on the temperature-time conversion law.
The conditions will be described below.

Device: dynamic viscoelasticity measuring device (trade name: DMA EXPLEXOR 500N, manufactured by NETZSCH Co.)
Measurement mode: Tension

Static strain: 2%
Dynamic strain: 0.5%
Measurement temperature: -30°C to 80°C (56 points in increments of 2°C)
Measurement frequency: 0.1 to 100 Hz (5 points)

A master curve is created at a reference temperature of 24°C by using in-device software.
From the resulting master curve, mathematical approximation was performed based on the generalized Maxwell model. The generalized Maxwell model is as follows.

[Math. 1]

$$E_r(\tau) = E_e + \sum_{i=1}^{N} E_i \exp\left(-\frac{\tau}{\tau_i}\right)$$

From the above equation, separation into the storage elastic modulus E' and the loss elastic modulus E" can be described as follows.

[Math. 2]

$$E'(\omega) = E_e + \sum_{i=1}^{N} \frac{E_i \tau_i^2 \omega^2}{1 + \tau_i^2 \omega^2}$$

$$E''(\omega) = \sum_{i=1}^{N} \frac{E_i \tau_i}{1 + \tau_i^2 \omega^2}$$

The number of terms of the generalized Maxwell model was set as the elastic term ($E_e$) 1+ the viscoelastic term ($E_i$) 20 (i=1 to 20). $\tau_i$ was freely determined at 20 points between $10^{-8}$ to $10^5$. $E_e$ and $E_i$ were optimized by GRG non-linearity

(generalized reduced gradient method) such that E' and E" of the Maxwell model had the minimum difference with respect to E' and E" of the master curve. Specifically, the solver function of Excel was used. From the obtained master curve approximate expression, E' (E' at $1\times10^3$ Hz) was obtained.

Note that a sample for measurement was produced in the following manner.

A sample was produced to include a contact region of the blade rubber with a cleaning target member. The sample was produced by performing cutting into a strip shape having a length of 50 mm, a width of 1 mm, and a thickness of 0.7 mm.

[Evaluation 1-2; Measuring Method of Breaking Stress]

The breaking stress was measured by using a Tensilon universal tester (trade name: RTG-1225, manufactured by A&D Company, Limited) according to Japanese Industrial Standard (JIS) K6254-1993 at a tensile speed of 500 mm/min, a breaking point measurement sensitivity of 0.01 N, a marked line distance of 20 mm, a test temperature of 24°C, and the number of measurements of 2. The average value of two times was taken as the breaking stress.

Note that a sample for measurement was produced in the following manner.

A tip part of a wiper blade including a contact region with the cleaning target member was cut out by a length of about 100 mm in the longitudinal direction, and the thickness and width of a cut piece were measured and used as a strip-shaped measurement sample.

[Evaluation 1-3; Polyfunctional Alcohol Species and Measuring Method of Concentration]

The polyfunctional alcohol was detected by pyrolysis GC/MS (gas chromatography and mass spectrometry). The measurement conditions will be shown below.

Sampling position: A sample sampled at the tip portion of the blade rubber was measured by the following method. Note that, in sampling, a member of polyurethane or the like was cut with a bio cutter.

Device:

- Pyrolysis device: Trade name: EGA/PY-3030D, manufactured by Flortier lab Co.
- Gas chromatography device: TRACE1310 gas chromatograph, manufactured by ThermoFisher Scientific Co.
- Mass Spectrometer: ISQLT, manufactured by ThermoFisher Scientific Co.
- Pyrolysis temperature: 500°C
- GC column: Inner diameter 0.25 mm×30 m stainless capillary column
- Stationary phase 5% phenylpolydimethyl siloxane
- Temperature rising condition: Temperature is held at 50°C for 3 minutes and is increased to 300°C at 8°C/min.
- MS conditions: Mass number range m/z 10 to 650
- Scanning speed 1 sec/scan

Polyfunctional alcohol species were qualitative by GC/MS. A calibration curve in GC analysis of known concentrations of the qualified polyfunctional alcohol species was created, and quantitation was performed from the GC peak area ratio. The arithmetic average value of the numerical values obtained from the sample at the tip portion of the blade rubber was taken as the polyfunctional alcohol concentration.

[Evaluation 1-4; Measurement of M1, M2 and M3]

M1 to M3 were measured by using a direct sample introduction method (DI method) in which samples were introduced directly into the ion source without passing through a gas chromatograph (GC).

An ion trap type GC/MS (trade name: POLARIS Q, manufactured by Thermo Fisher Scientific Inc.) was used as the device, and a direct exposure probe (Direct Exposure Probe, (DEP)) was used as a direct introduction probe.

The sample sampled at the tip portion of the blade rubber was measured by the following method. Note that, in sampling, a member of polyurethane or the like was cut with a bio cutter.

A sample in an amount of 0.1 μg sampled at the tip portion of the blade rubber was fixed to a filament located at the tip of the probe, and was inserted directly into the ionization chamber. Thereafter, rapid heating was performed from room temperature to 1000°C at a constant ramp rate (about 10°C/s), and the vaporized gas was detected by a mass spectrometer.

When the detected amount M1 of all ions was set to be the sum of the integrated intensities of all peaks in the

obtained total ion current thermogram, and

the sum of the integrated intensities of peaks of an extracted ion thermogram having an m/z value derived from a trifunctional or higher polyfunctional isocyanate was set as M2, (M2/M1) was calculated by using the values of M1 and M2. When the sum of the integrated intensities of peaks in the extracted ion thermogram of the m/z value derived from diisocyanate was set as M3, (M3/M1) was calculated by using the values of M1 and M3. The arithmetic average value of the obtained numerical values was taken as the values of (M2/M1) and (M3/M1).

Here, TTI used as the trifunctional or higher polyfunctional isocyanate in the present example has a structure represented by the following chemical formula (3). In the extracted ion thermogram obtained in this evaluation, a peak derived from a positive ionizate of TTI having a peak top at a position of m/z of 366.5 to 367.5 was detected. Therefore, in the present example, the integrated intensity of the peak was set as M2.

[C3]

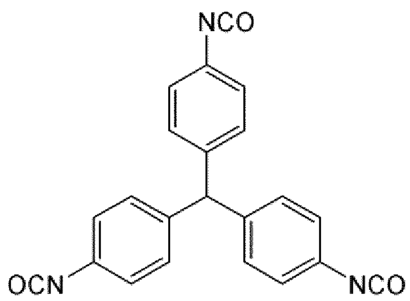

(3)

In addition, in other examples described later, regarding the blade rubber containing polyurethane synthesized by using polymeric MDI as a trifunctional or higher polyfunctional isocyanate, in the extracted ion thermogram obtained in this evaluation, peaks derived from a positive ionized product of polymeric MDI having a peak top at each position in a range in which the m/z value showing n=1 in the structure represented by the chemical formula (1)' was 380.5 to 381.5, a range in which the m/z value showing n=2 was 511.5 to 512.5, a range in which the m/z value showing n=3 was 642.5 to 643.5, and a range in which the m/z value showing n=4 was 773.5 to 774.5 were detected. Therefore, in this example, the sum of the integrated intensities of the respective peaks was set as M2.

Similarly, in the examples described later, tris(phenyl isocyanate)thiophosphate (TPTI) used as a trifunctional or higher polyfunctional isocyanate has a structure represented by the chemical formula (4). In the extracted ion thermogram obtained in this evaluation, a peak derived from a positive ionizate of TPTI having a peak top at a position of m/z of 464.5 to 465.5 was detected. Therefore, in this example, the integrated intensity of the peak was set as M2.

[C4]

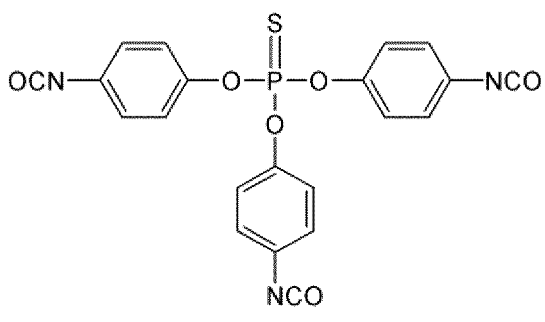

(4)

On the other hand, in the case of 4,4'-MDI that was a diisocyanate, in a range in which m/z of the structure represented by the chemical formula (2) derived from 4,4'-MDI was 249.5 to 250.5, the structure represented by the chemical formula (2) was detected by positive ionization. The integrated intensity of the peak of the extracted ion thermogram corresponding to this structure was taken as (M3).

<Production of Blade Rubber 2 to 13>

Blade rubber 2 to 13 were produced in the same manner as the blade rubber 1 except that the type and blending amount of the prepolymer and the type and blending amount of the curing agent were changed as described in Table 3-1

and Table 3-2. The obtained blade rubber 2 to 13 were subjected to the evaluations 1-1 to 1-4.

Note that, in the production of the blade rubber 2, the blade rubber 5, and the blade rubber 9, pentaerythritol (manufactured by Tokyo Chemical Industry Co., Ltd.) was used as a polyfunctional alcohol for a curing agent.

In the production of the blade rubber 3, polymeric MDI (trade name: Millionate MR-400, manufactured by Tosoh Corporation) (referred to as MR400 below) was used as a trifunctional or higher polyfunctional isocyanate for the prepolymer.

In the production of the blade rubber 4 and the blade rubber 6, polymeric MDI (trade name: Millionate MR-200, manufactured by Tosoh Corporation) (referred to as MR200 below) was used as the trifunctional or higher polyfunctional isocyanate for the prepolymer.

In addition, in the production of the blade rubber 4 and the blade rubber 8, glycerin (manufactured by Tokyo Chemical Industry Co., Ltd.) was used as the polyfunctional alcohol for the curing agent.

Further, in the production of the blade rubber 8, triphenylmethane-4,4',4"-triisocyanate (trade name: Ultite Super CA, manufactured by TOHO Chemical Industry Co., Ltd.) (referred to as TTI below) was used as the trifunctional or higher polyfunctional isocyanate for the prepolymer.

In the production of the blade rubber 7, polymeric MDI (trade name: Cosmonate M-200, manufactured by Mitsui Chemicals, Inc.) (referred to as M-200 below) was used as the trifunctional or higher polyfunctional isocyanate for the prepolymer. Polytetramethylene ether glycol (trade name: PTG-2000SN, manufactured by Hodogaya Chemical Co., Ltd.) (referred to as PTG-2000SN below) having a number average molecular weight of 2000 was used as the polyol. In addition, as a polyol for the curing agent, polytetramethylene ether glycol (trade name: PTG-1000SN, manufactured by Hodogaya Chemical Co., Ltd.) (referred to as PTG-1000SN below) having a number average molecular weight of 1000 was used.

<Production of Blade Rubber 14 (for Comparative Example)>

50.0 parts of mass of carbon black (trade name: TOKA BLACK #7360SB, manufactured by Tokai Carbon Co., Ltd.), 5.0 parts of mass of zinc oxide (trade name: Zinc oxide 2 kinds, manufactured by Sakai Chemical Industry Co., Ltd.), 1.0 parts of mass of zinc stearate (trade name: SZ-2000, manufactured by Sakai Chemical Industry Co., Ltd.), and 25 parts of mass of calcium carbonate (trade name: Nanox #30, manufactured by Maruo Calcium Co., Ltd.) were added to 100 parts of mass of natural rubber, and the mixture was kneaded for 15 minutes with a sealed mixer adjusted to 50°C.

To this, 1.2 parts of mass of sulfur and 4.5 parts of mass of tetrabenzyl thiuram sulfide (TBzTD) (trade name: Perkasit TBzTD, manufactured by FLEXKINS CORPORATION) were added as a vulcanizing agent. Then, the mixture was kneaded for 10 minutes by a two-roll machine cooled to a temperature of 25°C to obtain a rubber composition. The obtained rubber composition was put in a molding die for blade rubber, and vulcanized by heating at a temperature of 170°C for 20 minutes. Thereafter, demolding was performed to obtain blade rubber 14 according to Comparative Example 1.

Regarding the blade rubber 1 to 14, the type and blending amount of the prepolymer, the type and blending amount of the curing agent, and the results of Evaluation 1-1 to 1-4 are shown in Table 4-1 and Table 4-2.

[Table 4-1]

Table 4-1

| Blade rubber NO. | | | | Blade rubber 1 | Blade rubber 2 | Blade rubber 3 | Blade rubber 4 |
|---|---|---|---|---|---|---|---|
| Blending | Prepolymer | MDI | Blending amount (g) | 219.0 | 219.0 | 201.8 | 185.7 |
| | | Trifunctional or higher polyfunctional isocyanate | Type | TPTI | TPTI | MR400 | MR200 |
| | | | Blending amount (g) | 210.0 | 210.0 | 210.0 | 210.0 |
| | | Polyol | Type | PBA2500 | PBA2500 | PBA2500 | PBA2500 |
| | | | Blending amount (g) | 571.0 | 571.0 | 588.2 | 604.3 |
| | Curing agent | Trifunctional or higher polyfunctional alcohol | Type | TMP | Pentaerythritol | TMP | Glycerin |
| | | | Blending amount (g) | 42.9 | 29.4 | 53.4 | 40.8 |
| | | | Type | PHA1000 | PHA1000 | PHA1000 | PHA1000 |
| | | Polyol | Blending amount (g) | 243.0 | 173.6 | 302.8 | 367.0 |
| | | 1.4-BD | Blending amount (g) | 0 | 0 | 0 | 0 |
| | | No25 | Blending amount (g) | 0 | 0 | 0 | 0 |
| | | PC46 | Blending amount (g) | 0.03 | 0.1 | 0.04 | 0.04 |
| | | RX5 | Blending amount (g) | 1 | 0.7 | 1.25 | 1.43 |
| Material composition | | M2/M1 | | 0.0123 | 0.0146 | 0.0108 | 0.0099 |
| | | M3/M1 | | 0.0595 | 0.0636 | 0.0520 | 0.0461 |
| | | M2/M3 | | 0.2059 | 0.2290 | 0.2070 | 0.2140 |
| | | Polyfunctional alcohol concentration (mmol/g) | | 0.25 | 0.18 | 0.29 | 0.31 |
| High-frequency storage elastic modulus E'(2) | | | MPa | 188.7 | 210.8 | 158.1 | 121.3 |
| Breaking stress | | | MPa | 18.2 | 18.8 | 17.3 | 16.7 |

Table 4-1 (continued)

| Blade rubber NO. | | | | Blade rubber 5 | Blade rubber 6 | Blade rubber 7 |
|---|---|---|---|---|---|---|
| Blending | Prepolymer | MDI | Blending amount (g) | 216.3 | 183.0 | 134.4 |
| | | Trifunctional or higher poly-functional iso-cyanate | Type | TPTI | MR200 | Cosmonate M-200 |
| | | | Blending amount (g) | 210.0 | 210.0 | 230.0 |
| | | Polyol | Type | PBA2500 | PBA2500 | PTG-2000SN |
| | | | Blending amount (g) | 573.7 | 607.0 | 635.6 |
| | Curing agent | Trifunctional or higher poly-functional al-cohol | Type | Pentaerythritol | TMP | TMP |
| | | | Blending amount (g) | 43.9 | 53.7 | 45.1 |
| | | Polyol | Type | PHA1000 | PHA1000 | PTG-1000SN |
| | | | Blending amount (g) | 248.5 | 304.3 | 255.4 |
| | | 1.4-BD | Blending amount (g) | 0 | 0 | 0 |
| | | No25 | Blending amount (g) | 0.4 | 0.16 | 0.13 |
| | | PC46 | Blending amount (g) | 0.13 | 0.49 | 0.41 |
| | | RX5 | Blending amount (g) | 0 | 0 | 0 |
| Material composition | | M2/M1 | | 0.0121 | 0.0107 | 0.0151 |
| | | M3/M1 | | 0.0585 | 0.0471 | 0.0361 |
| | | M2/M3 | | 0.2070 | 0.2280 | 0.4185 |
| | | Polyfunctional alcohol concentration (mmol/g) | | 0.25 | 0.29 | 0.26 |
| High-frequency storage elastic modulus E'(2) | | | MPa | 156.6 | 134.0 | 118.2 |
| Breaking stress | | | MPa | 17.1 | 15.9 | 15.7 |

[Table 4-2]

Table 4-2

| Blade rubber No. | | | | Blade rubber 8 | Blade rubber 9 | Blade rubber 10 |
|---|---|---|---|---|---|---|
| Blending | Prepolymer | MDI | Blending amount (g) | 327.4 | 398.3 | 332.0 |
| | | Trifunctional or higher polyfunctional isocyanate | Type | TTI | - | - |
| | | | Blending amount (g) | 40.0 | - | - |
| | | Polyol | Type | PBA2500 | PBA1000 PBA2000 | PBA2500 |
| | | | Blending amount (g) | 632.6 | 300.8 300.8 | 668.0 |
| | Curing agent | Trifunctional or higher polyfunctional alcohol | Type | Glycerin | Pentaerythritol | TMP |
| | | | Blending amount (g) | 33.5 | 41.5 | 85.3 |
| | | Polyol | Type | PHA1000 | PHA1000 | - |
| | | | Blending amount (g) | 189.9 | 51.82 | - |
| | | 1.4-BD | Blending amount (g) | 0.0 | 10.4 | 0 |
| | | No25 | Blending amount (g) | 0.1 | 0.05 | 0.3 |
| | | PC46 | Blending amount (g) | 0.3 | 0.14 | 0 |
| | | RX5 | Blending amount (g) | 0 | 0 | 0 |
| Material composition | | M2/M1 | | 0.0017 | 0.0000 | 0.0000 |
| | | M3/M1 | | 0.0936 | 0.2779 | 0.1071 |
| | | M2/M3 | | 0.0176 | 0.0000 | 0.0000 |
| | | Polyfunctional alcohol concentration (mmol/g) | | 0.30 | 0.28 | 0.59 |
| High-frequency storage elastic modulus E'(2) | | | MPa | 100.0 | 90.0 | 310.2 |
| Breaking stress | | | MPa | 8.0 | 7.3 | 16.8 |

Table 4-2 (continued)

| Blade rubber No. | | | | Blade rubber 11 | Blade rubber 12 | Blade rubber 13 | Blade rubber 14 |
|---|---|---|---|---|---|---|---|
| Blending | Prepolymer | MDI | Blending amount (g) | 346.9 | 340.8 | 326.6 | - |
| | | Trifunctional or higher poly-functional iso-cyanate | Type | - | - | MR200 | - |
| | | | Blending amount (g) | - | - | 20 | - |
| | | Polyol | Type | PBA2000 | PBA1000 | PBA2500 | - |
| | | | Blending amount (g) | 653.1 | 659.2 | 673.4 | - |
| | Curing agent | Trifunctional or higher poly-functional al-cohol | Type | TMP | TMP | TMP | - |
| | | | Blending amount (g) | 85.3 | 56.5 | 89.4 | - |
| | | Polyol | Type | - | - | - | - |
| | | | Blending amount (g) | - | - | - | - |
| | | 1.4-BD | Blending amount (g) | 0 | 0 | 0 | - |
| | | No25 | Blending amount (g) | 0.3 | 0.2 | 0.3 | - |
| | | PC46 | Blending amount (g) | 0 | 0 | 0 | - |
| | | RX5 | Blending amount (g) | 0 | 0 | 0 | - |
| Material composition | | M2/M1 | | 0.0000 | 0.0000 | 0.0013 | - |
| | | M3/M1 | | 0.1119 | 0.1129 | 0.1030 | - |
| | | M2/M3 | | 0.0000 | 0.0000 | 0.0128 | - |
| | | Polyfunctional alcohol concentration (mmol/g) | | 0.59 | 0.40 | 0.60 | - |
| High-frequency storage elastic modulus E'(2) | | | MPa | 398.4 | 351.2 | 331.3 | 18.0 |
| Breaking stress | | | MPa | 24.2 | 22.8 | 22.2 | 4.2 |

(Example 1)

(Manufacturing of Regenerated Blade Rubber (Regeneration Step))

First, it has been confirmed that the edge portion 8 of the lip portion 3 of the blade rubber 1 to be subjected to a regeneration operation is parallel to an edge 1600 of the base portion 1 in the longitudinal direction thereof (depth direction of a paper surface in Fig. 16A).

Then, the blade rubber 1 was fixed to the regeneration device A of blade rubber prepared in advance by being clamped by the clamping member. The cutting unit 30 was moved from the end portion A to the end portion B of the lip portion by using a ROBOCYLINDER (product number RCS3-CT8C, manufactured by EYE I Co., Ltd.) such that the feed speed of the blade was 1000 mm/sec, and the tip of the lip portion of the blade rubber was cut to obtain regenerated blade rubber 1.

(Evaluation 2-1)

Regarding the obtained regenerated blade rubber, the shape of an edge portion newly formed by cutting was observed at a magnification of 1000 times by using a digital microscope (trade name: VHX-5000 (main body), VH-ZST (lens); Manufactured by Keyence Corporation). At this time, as illustrated in Fig. 16B, the regenerated wiper blade was fixed such that the lip portion 3 was positioned vertically downward with respect to the base portion 1 and an angle θ16 formed by an axis 1601 of the lip portion and a horizontal line 1603 was 45 degrees. A digital microscope 1607 was moved in the depth direction of the paper surface of Fig. 16 to be parallel to the base portion 1, and the shape of an edge 1605 newly formed by the cut surface was photographed from vertically above over the entire length of the regenerated blade rubber. Then, at each position in the longitudinal direction of the regenerated blade rubber. A distance L (see Fig. 16C) between a straight line 1600 parallel to the edge of the base portion 1 and the edge 1605 was calculated. Based on the average value (straight line 1607 in Fig. 16D) of the distances L at 100 points randomly selected in the longitudinal direction, the maximum value (ΔL) of a difference (absolute value) in each distance L from the average value was obtained (Fig. 16D). The obtained results were evaluated based on the following criteria. Here, in a case where ΔL is 0 μm, it means that the edge 1600 of the base portion 1 and the new edge 1605 of the lip portion 3 are parallel to each other, that is, no vibration shape is generated on the cut surface.

Rank A: ΔL=0 μm or more and less than 1 μm.
Rank B: ΔL=1 μm or more and less than 5 μm.
Rank C: ΔL=5 μm or more and less than 10 μm.
Rank D: ΔL=10 μm or more and less than 30 μm.
Rank E: ΔL=30 μm or more.

(Evaluation 2-2)

The obtained regenerated blade rubber was subjected to the following evaluation.

The cutting unit 30 was removed from the regeneration device A, and there was no object vertically above the cut surface of the regenerated blade rubber. An ultra-high-speed and high-precision laser dimension measuring instrument (trade name: LS-09030, manufactured by Keyence Corporation, maximum measurement range: 30 mm) was placed on the surface of a flat plate 16 of the regeneration device A such that the regenerated blade rubber was located between a laser light projecting unit and a light receiving unit of the high-speed and high-precision laser dimension measuring instrument. At this time, a distance between a reference position for distance measurement of the high-speed and high-accuracy laser measuring instrument and the surface of the flat plate 16 was adjusted such that the entire cutting surface in the longitudinal direction was located vertically below the reference position. Subsequently, the high-speed and high-accuracy laser measuring instrument was moved in parallel with the longitudinal direction of the regenerated blade rubber to measure the end portion A of the regenerated blade rubber, the midpoint between the end portion A and the end portion B, and a distance (height) of the cut surface at the end portion B from the reference position. In addition, by setting the end portion A to 0 with respect to the total length of 650 mm of the blade rubber, a distance (cutting distance) by which the blade advances toward the end portion B without deviating from the blade rubber that is a regeneration target was set as P (mm).

(Evaluation 2-3)

The water wiping performance of the regenerated wiper blade was evaluated by the following method.

<Evaluation Method>

Regenerated blade rubber was subjected to a "wiping performance test" in accordance with Japanese Industrial Standard (JIS) D5710: 1998 automobile parts-wiper arms and wiper blades.

A test device equipped with a windshield, a wiper arm, a wiper link, and a wiper motor on the front side of a passenger car ("Wish" (vehicle model name, manufactured by Toyota Motor Corporation)) was prepared.

- Windshield (windshield for "Wish" manufactured by Toyota Motor Corporation; model number: AZE/ZNE10G·14G·11W; Manufactured by AGC Inc.)
- Windshield wiper motor (model number: 85110-1A080, Toyota Motor Corporation genuine parts)
- DC stabilized power supply (model name: PSW-60L30; Manufactured by Texio Technology Co., Ltd.)
- Grip shape of wiper: U-hook type
- Pressing force of wiper blade: 18 N/m (* arm pressing force per 1 m of wiper blade)
- Wiping reciprocating speed of wiper blade: 55 times/min (1.65 m/s in M zone)

- Wiper blade (blade rubber) longitudinal length: 650 mm

Regenerated blade rubber to which a blade stay was attached was mounted on a wiper arm of the test device to be in a normal use state. At this time, the regenerated blade rubber was mounted such that the end portion A side was on the inner peripheral side of the windshield and the end portion B side was on the outer peripheral side of the windshield.
Water droplets were sprayed in a mist form on the surface of the windshield, the wiper blade was reciprocated once, and the number of unwiped lines was visually determined from a position of 50 cm away from the surface of the windshield. Note that this evaluation was performed in an environment of an ambient temperature of 25°C and a humidity of 50%RH. Therefore, the above determination was made one second after the wiping was completed based on the above standard. The number of unwiped lines of water droplets in three zones (Sin, M, and Sout, see Fig. 15) of the windshield was counted.
Note that the M zone is a wiping range of a shaded portion in a wiping area (Fig. 15) formed by the wiper blade reciprocating, Sin is a wiping range other than the M zone in the wiping area, and is a wiping range inside the M zone, and Sout is a wiping range other than the M zone in the wiping area, and is a wiping range outside the M zone. In addition, L represents the length of the wiper blade in the longitudinal direction.

(Evaluation 2-4)

The wiping performance of an oil film by the regenerated wiper blade was evaluated by the following method.
Regenerated blade rubber that is an evaluation target was mounted on the test device prepared in Evaluation 2-3 in the same manner as in Evaluation 2-3. Subsequently, silicone oil (trade name: KF-96-50cs, manufactured by Shin-Etsu Chemical Co., Ltd.) was applied to the entire wiping surface in the entire surface of the windshield. This simulates a state where an oil film adheres to the surface of the windshield. Thereafter, the wiper blade was reciprocated once in the same manner as in Evaluation 2-3. Then, the wiping state of the silicone oil on the surface of the windshield was visually observed from the side of the surface opposite to the surface coated with the oil film of the windshield. The ratio (referred to as a silicone oil film removal area ratio (%) below) of the area of a part where the silicone oil film was removed with respect to the total wiped area by the wiper blade was calculated and evaluated in accordance with the following criteria.

[Evaluation Criteria]

Rank A: The silicone oil film removal area ratio is from 95% to 100%.

Rank B: The silicone oil film removal area ratio is 90% or more and less than 95%.

Rank C: The silicone oil film removal area ratio is 85% or more and less than 90%.

Rank D: The silicone oil film removal area ratio is 80% or more and less than 85%.

Rank E: The silicone oil film removal area ratio is 40% or more and less than 80%.

Rank F: The silicone oil film removal area ratio is 20% or more and less than 40%.

Rank G: The silicone oil film removal area ratio is less than 20%.

(Examples 2 to 16)

Regenerated blade rubber was produced in the same manner as in Example 1 except that the blade rubber 1 to 13 and the regeneration devices A to D were combined as described in Table 5. The obtained regenerated blade rubber was subjected to Evaluations 2-1 to 2-4.

[Table 5]

Table 5

| | Blade rubber No. | Regeneration device |
|---|---|---|
| Example 1 | Blade rubber 1 | Regeneration device A |
| Example 2 | Blade rubber 2 | Regeneration device A |
| Example 3 | Blade rubber 3 | Regeneration device A |
| Example 4 | Blade rubber 4 | Regeneration device A |
| Example 5 | Blade rubber 5 | Regeneration device A |
| Example 6 | Blade rubber 6 | Regeneration device A |
| Example 7 | Blade rubber 7 | Regeneration device A |
| Example 8 | Blade rubber 8 | Regeneration device A |
| Example 9 | Blade rubber 9 | Regeneration device A |
| Example 10 | Blade rubber 10 | Regeneration device A |
| Example 11 | Blade rubber 11 | Regeneration device A |
| Example 12 | Blade rubber 12 | Regeneration device A |
| Example 13 | Blade rubber 13 | Regeneration device A |
| Example 14 | Blade rubber 4 | Regeneration device B |
| Example 15 | Blade rubber 4 | Regeneration device C |
| Example 16 | Blade rubber 4 | Regeneration device D |
| Comparative Example 1 | Blade rubber 14 | Regeneration device D |

(Comparative Example 1)

The blade rubber 14 was regenerated by using the regeneration device D to produce the regenerated blade rubber 14 according to Comparative Example 1, and the regenerated blade rubber was subjected to Evaluations 2-1 to 2-4.

For the regenerated blade rubber according to Examples 1 to 16 and Comparative Example 1, the results of Evaluation 2-1 are shown in Table 6, the results of Evaluation 2-2 are shown in Table 7, the results of Evaluation 2-3 are shown in Table 8-1, and the results of Evaluation 2-4 are shown in Table 9.

[Table 6]

Table 6

| | | Evaluation 2-1 Rank |
|---|---|---|
| Example | 1 | A |
| | 2 | A |
| | 3 | A |
| | 4 | B |
| | 5 | A |
| | 6 | A |
| | 7 | A |
| | 8 | B |
| | 9 | C |
| | 10 | A |
| | 11 | A |
| | 12 | A |
| | 13 | A |
| | 14 | B |
| | 15 | C |
| | 16 | C |
| Comparative Example 1 | | E |

[Table 7]

Table 7

| | | Height (mm) | | | Distance P (mm) |
|---|---|---|---|---|---|
| | | End portion A | Midpoint | End portion B | |
| Example | 1 | 10.000 | 10.000 | 10.000 | 650 |
| | 2 | 10.000 | 10.000 | 10.000 | 650 |
| | 3 | 10.000 | 10.000 | 10.000 | 650 |
| | 4 | 9.998 | 10.000 | 9.999 | 650 |
| | 5 | 10.000 | 10.000 | 10.000 | 650 |
| | 6 | 10.000 | 10.000 | 10.000 | 650 |
| | 7 | 10.000 | 10.000 | 10.000 | 650 |
| | 8 | 9.998 | 10.000 | 9.998 | 650 |
| | 9 | 9.993 | 9.999 | 9.994 | 650 |
| | 10 | 10.000 | 10.000 | 10.000 | 650 |
| | 11 | 10.000 | 10.000 | 10.000 | 650 |
| | 12 | 10.000 | 10.000 | 10.000 | 650 |
| | 13 | 10.000 | 10.000 | 10.000 | 650 |
| | 14 | 9.998 | 10.000 | 9.996 | 650 |
| | 15 | 9.995 | 9.993 | 9.991 | 650 |
| | 16 | 9.991 | 9.991 | 9.991 | 650 |

(continued)

| | Height (mm) | | | Distance P (mm) |
|---|---|---|---|---|
| | End portion A | Midpoint | End portion B | |
| Comparative Example 1 (*) | 9.358 | 8.985 | 8.013 | 38 |
| * In Comparative Example 1, the blade hardly entered into the side surface on the blade rubber end portion A side, and the blade was detached from the blade rubber even after the entrance. The blade was entered repeatedly from the detached position to cut the entire surface of the blade rubber. | | | | |

[Table 8-1]

Table 8-1

| | | Zone | | | | | | | | |
|---|---|---|---|---|---|---|---|---|---|---|
| | | Sin | | | M | | | Sout | | |
| | | Hair line (pieces) | Heavier line (pieces) | Wide line (pieces) | Hair line (pieces) | Heavier line (pieces) | Wide line (pieces) | Hair line (pieces) | Heavier line (pieces) | Wide line (pieces) |
| Examples | 1 | 0 | 0 | 0 | 0 | 0 | 0 | 0 | 0 | 0 |
| | 2 | 0 | 0 | 0 | 0 | 0 | 0 | 0 | 0 | 0 |
| | 3 | 1 | 0 | 0 | 0 | 0 | 0 | 0 | 0 | 0 |
| | 4 | 1 | 0 | 0 | 0 | 0 | 0 | 1 | 0 | 0 |
| | 5 | 0 | 0 | 0 | 0 | 0 | 0 | 0 | 0 | 0 |
| | 6 | 1 | 0 | 0 | 0 | 0 | 0 | 0 | 0 | 0 |
| | 7 | 1 | 0 | 0 | 0 | 0 | 0 | 0 | 0 | 0 |
| | 8 | 1 | 0 | 0 | 0 | 0 | 0 | 1 | 0 | 0 |
| | 9 | 2 | 0 | 0 | 1 | 0 | 0 | 2 | 0 | 0 |
| | 10 | 0 | 0 | 0 | 0 | 0 | 0 | 0 | 0 | 0 |
| | 11 | 0 | 0 | 0 | 0 | 0 | 0 | 0 | 0 | 0 |
| | 12 | 0 | 0 | 0 | 0 | 0 | 0 | 0 | 0 | 0 |
| | 13 | 0 | 0 | 0 | 0 | 0 | 0 | 0 | 0 | 0 |
| | 14 | 1 | 0 | 0 | 0 | 0 | 0 | 3 | 0 | 0 |
| | 15 | 2 | 0 | 0 | 2 | 0 | 0 | 3 | 0 | 0 |
| | 16 | 1 | 1 | 0 | 2 | 0 | 0 | 2 | 1 | 0 |
| Comparative Example 1 | | 4 | 2 | 4 | 5 | 2 | 3 | 2 | 5 | 5 |
| "Hair line": A very thin streaky unwiped portion with a width of 0.5 mm or less. "Heavier line": A thin streaky unwiped portion with a width of 1 mm or less.<br>"Wide line": A band-shaped unwiped portion with a width of up to about 1 to 20 mm. It also includes a collection of several hair lines and heavier lines, and a thin film-like unwiped portion.<br>Note that, in the above standard, it is defined that the wiping performance of each zone is set to be equal to or less than the value shown in Table 8-2. | | | | | | | | | | |

[Table 8-2]

Table 8-2

| Items | M zone | | | S zone | | |
|---|---|---|---|---|---|---|
| | Hair line (pieces) | Heavier line (pieces) | Wide line (pieces) | Hair line (pieces) | Heavier line (pieces) | Wide line (pieces) |
| Initial wiping performance | 3 | 1 | 0 | 5 | 2 | 0 |
| Wiping performance after durability test | 5 | 2 | 0 | 7 | 3 | 2 |

[Table 9]

Table 9

| | | Evaluation 2-4 Wiping test of silicone oil film |
|---|---|---|
| | | Evaluation rank |
| Examples | 1 | A |
| | 2 | A |
| | 3 | B |
| | 4 | C |
| | 5 | A |
| | 6 | B |
| | 7 | B |
| | 8 | C |
| | 9 | D |
| | 10 | A |
| | 11 | A |
| | 12 | A |
| | 13 | A |
| | 14 | C |
| | 15 | D |
| | 16 | D |
| Comparative Example 1 | | G |

While the present disclosure has been described with reference to embodiments, it is to be understood that the present disclosure is not limited to the disclosed embodiments. The scope of the following claims is to be accorded the broadest interpretation so as to encompass all such modifications and equivalent structures and functions.

This application claims the benefit of Japanese Patent Application No. 2022-205749 filed December 22, 2022, and Japanese Patent Application No. 2023-207474 filed December 8, 2023, which are hereby incorporated by reference herein in their entirety.

**Claims**

**1.** A regeneration method of blade rubber of a wiper blade

in which at least a part of the blade rubber constitutes a contact portion with a wiping target object,
the regeneration method comprising:

preparing the blade rubber to be regenerated; and
entering a cutting blade into the blade rubber from a side portion of the blade rubber at one end portion A of the blade rubber, and moving the cutting blade relative to the blade rubber toward another end portion B of the blade rubber to remove at least a part of the contact portion, wherein
a storage elastic modulus at a vibration frequency of $1 \times 10^3$ Hz measured in an environment at a temperature of 24°C by using a sample sampled from the blade rubber to include at least a part of the contact portion is 90.0 to 500.0 MPa, and
a breaking stress of the sample measured in an environment at a temperature of 24°C is 4.2 to 30.0 MPa.

**2.** The regeneration method of blade rubber according to claim 1, wherein

the storage elastic modulus is 100.0 to 400.0 MPa, and
the breaking stress is 8.0 to 28.0 MPa.

**3.** The regeneration method of blade rubber according to claim 1 or 2, wherein the blade rubber comprises polyurethane.

**4.** The regeneration method of blade rubber according to claim 3, wherein

when a detection amount of all ions obtained in a manner that a sample that is sampled from the blade rubber and comprises the polyurethane is heated to a temperature of 1000°C at a ramp rate of 10°C/sec by using a mass spectrometer of a direct sample introduction type that ionizes a sample molecule by heating and vaporizing the sample in an ionization chamber is set as M1,
an integrated intensity of a peak of an extracted ion thermogram corresponding to a range of a m/z value derived from a polyfunctional isocyanate is set as M2, and
an integrated intensity of a peak of an extracted ion thermogram corresponding to a range of a m/z value derived from a diisocyanate is set as M3,
M2/M1 is 0.0010 to 0.0150,
M3/M1 is 0.0200 to 0.1100, and
M2/M3 is 0.0130 to 0.5000.

**5.** The regeneration method of blade rubber according to claim 3 or 4, wherein, when the sample that is sampled from the blade rubber and comprises polyurethane is measured by pyrolysis GC/MS, a concentration of a component derived from a trifunctional or higher polyfunctional alcohol in the polyurethane is 0.04 mmol/g to 0.70 mmol/g.

**6.** The regeneration method of blade rubber according to any one of claims 3 to 5, wherein the polyurethane is a cured product of a polyurethane raw material mixture that comprises an isocyanate compound comprising a diisocyanate and a trifunctional or higher polyfunctional isocyanate and an alcohol comprising a trifunctional or higher polyfunctional alcohol.

**7.** The regeneration method of blade rubber according to claim 6, wherein

the polyfunctional isocyanate is polymeric MDI, and
M2 is a sum of integrated intensities of peaks of an extracted ion thermogram corresponding to a range of a m/z value of 380.5 to 381.5, a range of a m/z value of 511.5 to 512.5, a range of a m/z value of 642.5 to 643.5, and a range of a m/z value of 773.5 to 774.5.

**8.** The regeneration method of blade rubber according to claim 6 or 7, wherein

the diisocyanate is 4,4'-MDI, and
M3 is an integrated intensity of a peak corresponding to a range of a m/z value of 249.5 to 250.5.

**9.** The regeneration method of blade rubber according to claim 3, wherein, when a detection amount of all ions obtained in a manner that a sample that is sampled from the blade rubber and comprises the polyurethane is heated to a temperature of 1000°C at a ramp rate of 10°C/sec by using a mass spectrometer of a direct sample introduction type that ionizes a sample molecule by heating and vaporizing the sample in an ionization chamber is set as M1,

an integrated intensity of a peak of an extracted ion thermogram corresponding to a range of a m/z value derived from a trifunctional or higher polyfunctional isocyanate is set as M2, and

an integrated intensity of a peak of an extracted ion thermogram corresponding to a range of a m/z value derived from a diisocyanate is set as M3,
M2/M1 is less than 0.0010.

**10.** The regeneration method of blade rubber according to claim 9, wherein M2/M1 is 0.0000 to 0.0008.

**11.** The regeneration method of blade rubber according to claim 9 or 10, wherein M3/M1 is 0.0900 to 0.2000.

**12.** The regeneration method of blade rubber according to any one of claims 9 to 11, wherein, when the sample that is sampled from the blade rubber and comprises the polyurethane is measured by pyrolysis GC/MS, a concentration of a component derived from a trifunctional or higher polyfunctional alcohol in the polyurethane is 0.30 mmol/g to 0.70 mmol/g.

**13.** The regeneration method of blade rubber according to any one of claims 9 to 12, wherein the polyurethane is

a cured product of a polyurethane raw material mixture that comprises an isocyanate compound comprising a diisocyanate, and
an alcohol comprising a trifunctional or higher polyfunctional alcohol.

**14.** The regeneration method of blade rubber according to claim 13, wherein

the diisocyanate comprises a diphenylmethane diisocyanate, and
the polyfunctional alcohol comprises trimethylolpropane.

**15.** The regeneration method of blade rubber according to any one of claims 1 to 14, wherein the relative movement is a movement in a longitudinal direction of the blade rubber.

**16.** The regeneration method of blade rubber according to any one of claims 1 to 15, wherein

in the blade rubber, the contact portion with the wiping target object is formed to extend in a longitudinal direction,
the cutting is removing at least a part of the contact portion by using a regeneration device,
the regeneration device includes
a blade portion that removes at least a part of the contact portion in the longitudinal direction as the cutting blade,
a clamping member of the blade rubber,
a biasing member that contacts the end portion B of the blade rubber and biases the blade rubber in a direction of the end portion A, and
a pressing member that presses a tip including the contact portion of the blade rubber in a lateral direction of the blade rubber to suppress elastic deformation due to movement of the blade portion, wherein
the clamping member clamps at least a part of the blade rubber from both side portions of the blade rubber in cross-sectional view in a direction perpendicular to a longitudinal direction of the blade rubber,
the clamping member is disposed at a position where at least a part of the blade rubber into which the blade portion enters is able to be clamped, and a position of the clamping member with respect to the blade rubber is fixed, and
the pressing member presses the blade rubber prior to the relative movement of the blade portion from the end portion A to the end portion B.

**17.** A manufacturing method of regenerated blade rubber,
the manufacturing method comprising:
obtaining blade rubber regenerated by the regeneration method of blade rubber according to any one of claims 1 to 16.

Fig. 1A

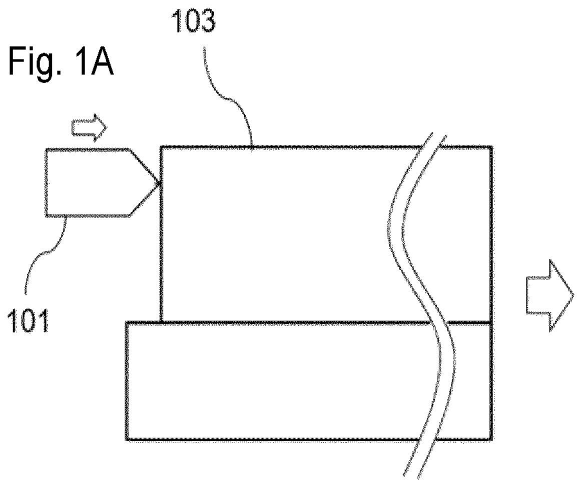


Fig. 1B

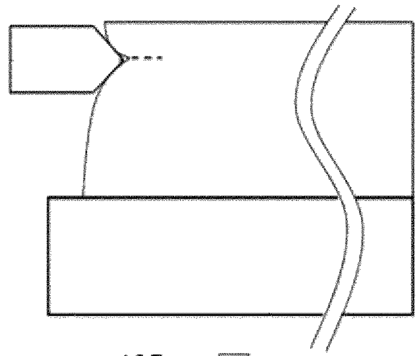

Fig. 1C

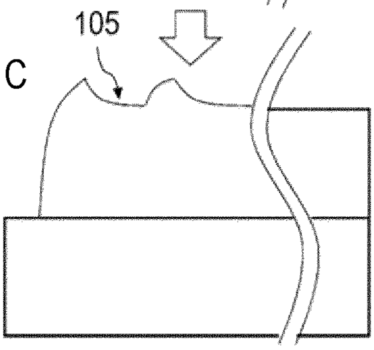


Fig. 2A

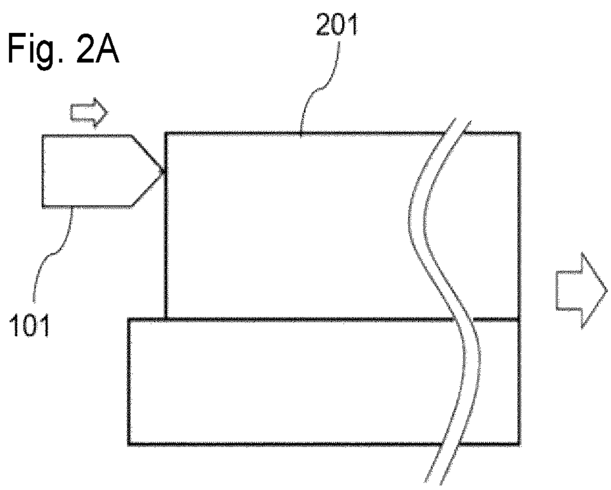


Fig. 2B

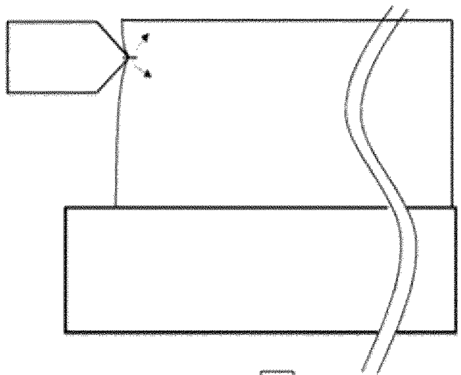

Fig. 2C

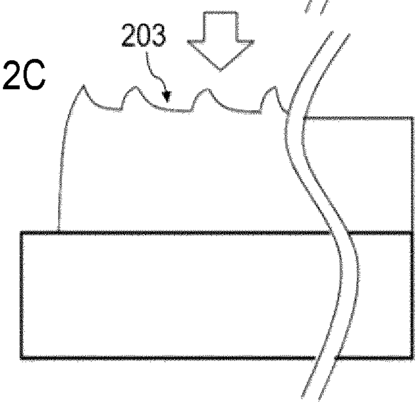

Fig. 3A

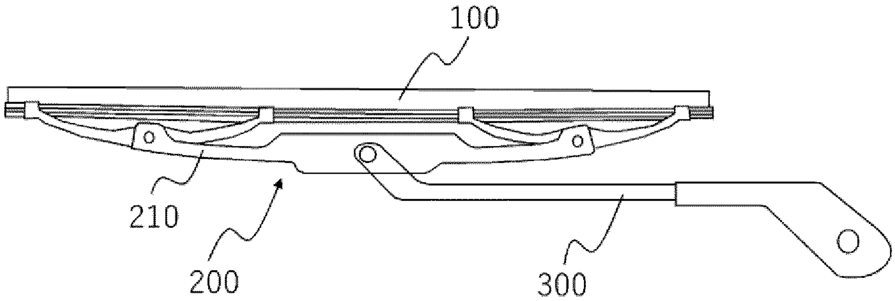


Fig. 3B

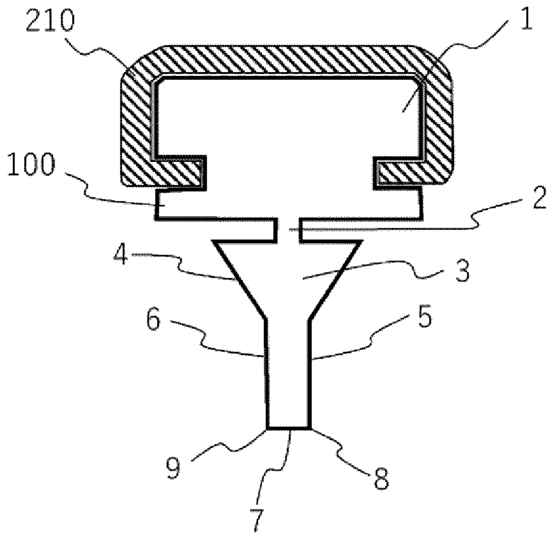


Fig. 3C

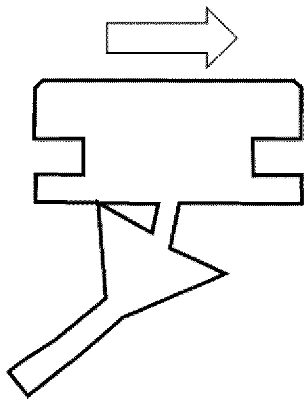

Fig. 4A

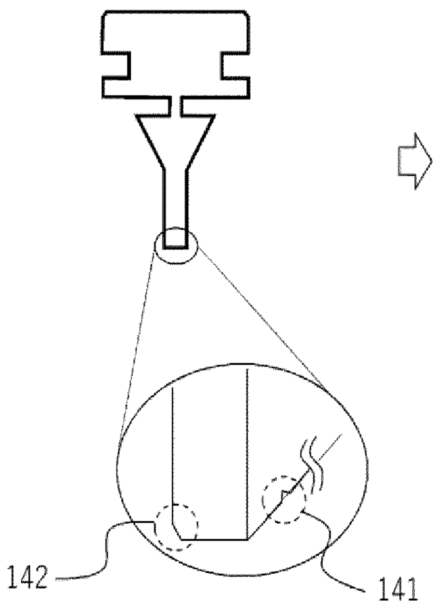


Fig. 4B

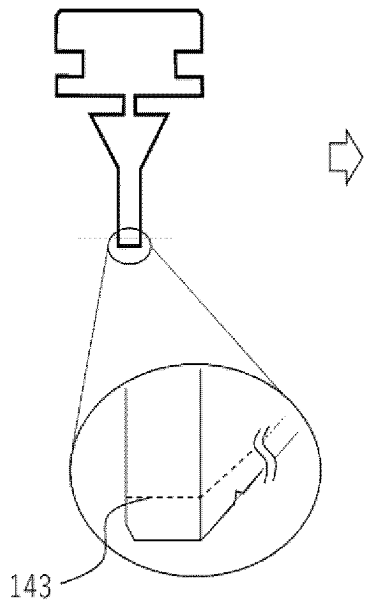


Fig. 4C

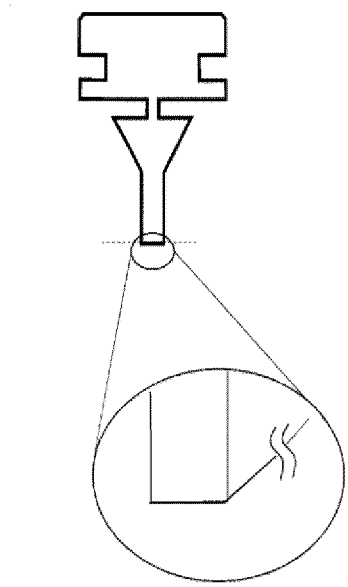

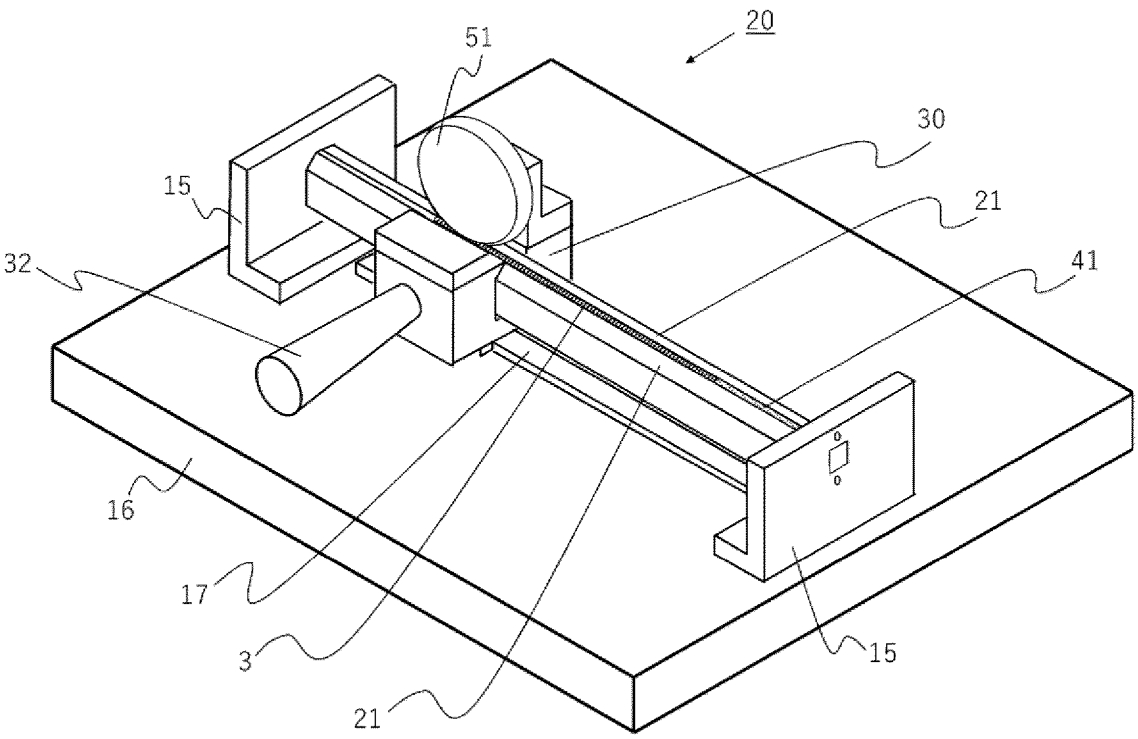
20
51
30
21
41
15
32
16
17
3
21
15

Fig. 5

Fig. 6A

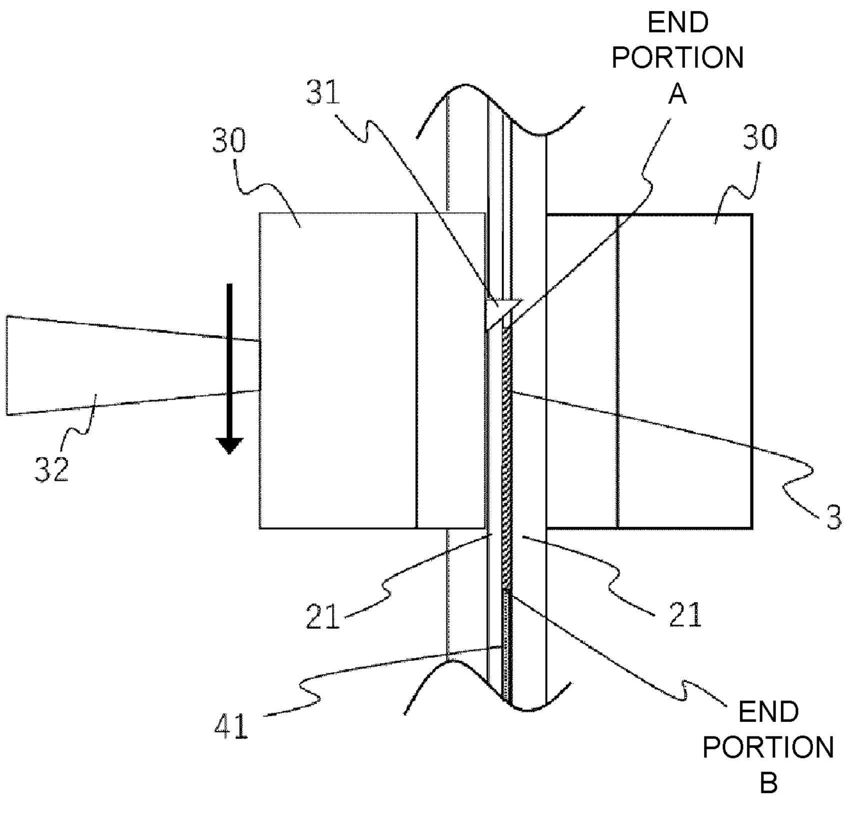
END
PORTION
A
31
30
30
32
3
21
21
41
END
PORTION
B

Fig. 6B

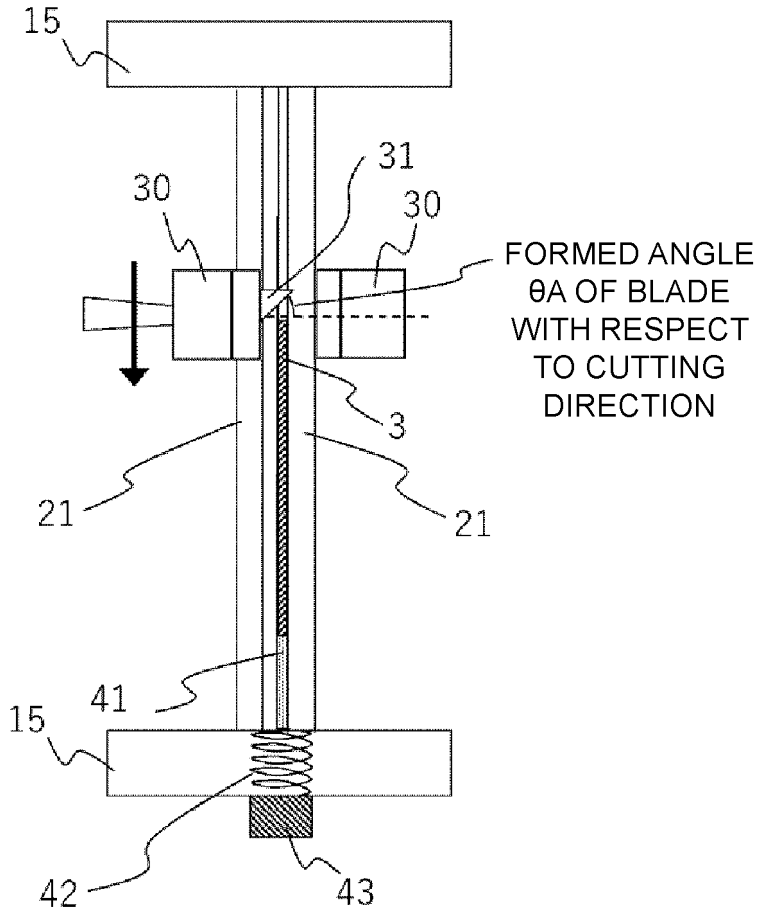


Fig. 7A

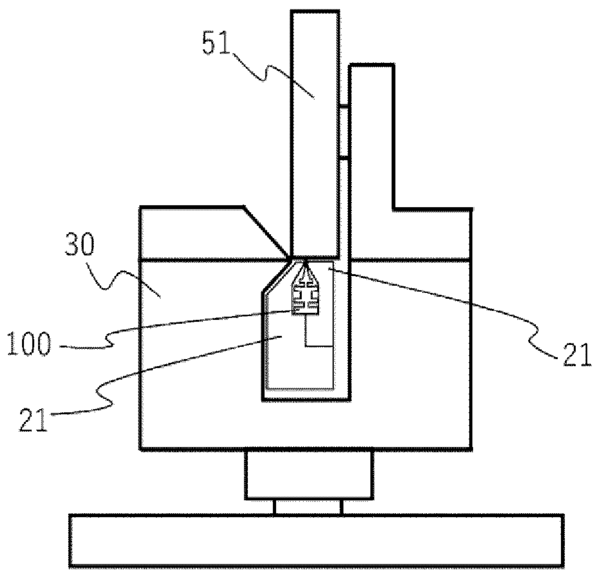


Fig. 7B

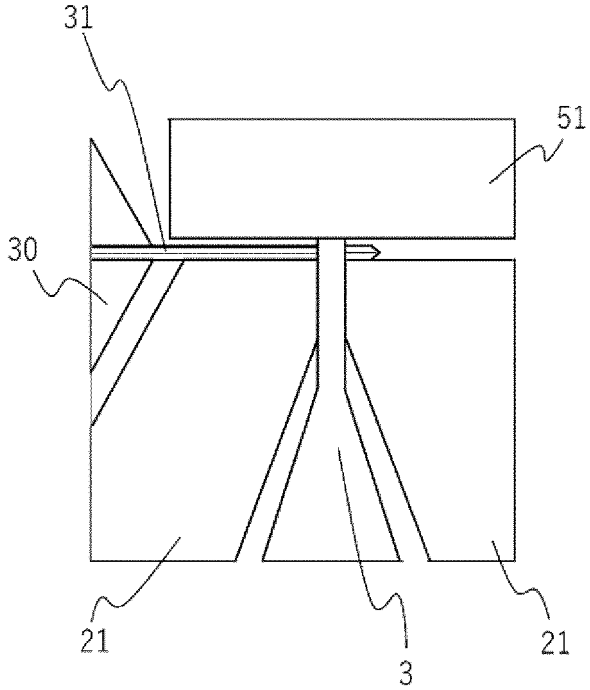

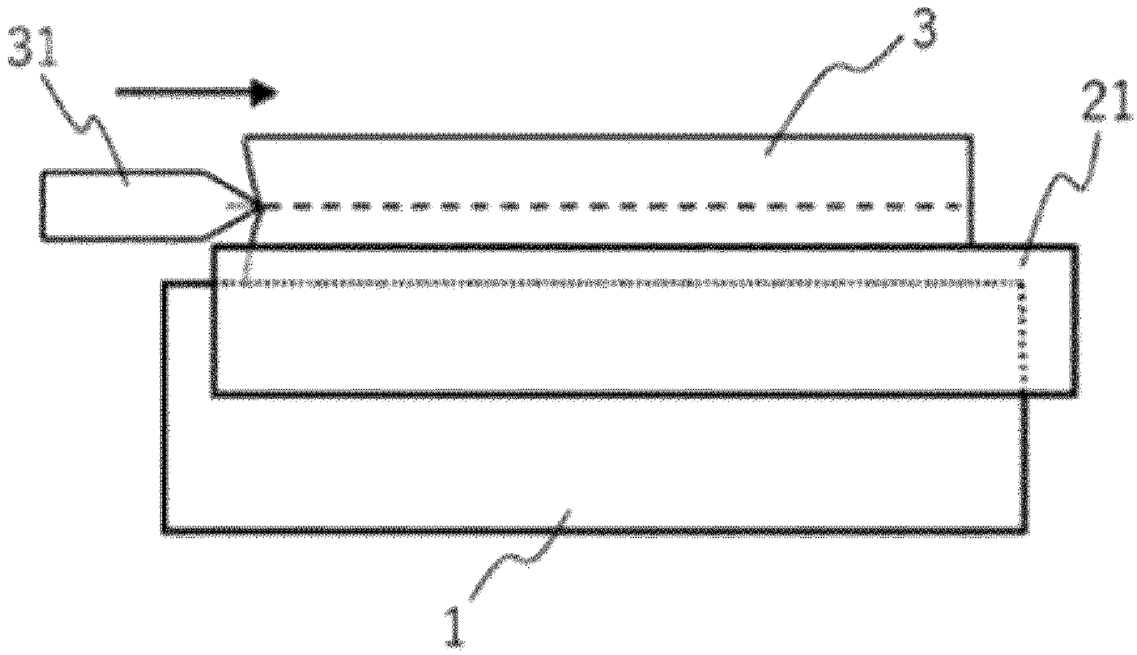


Fig. 8

Fig. 9A

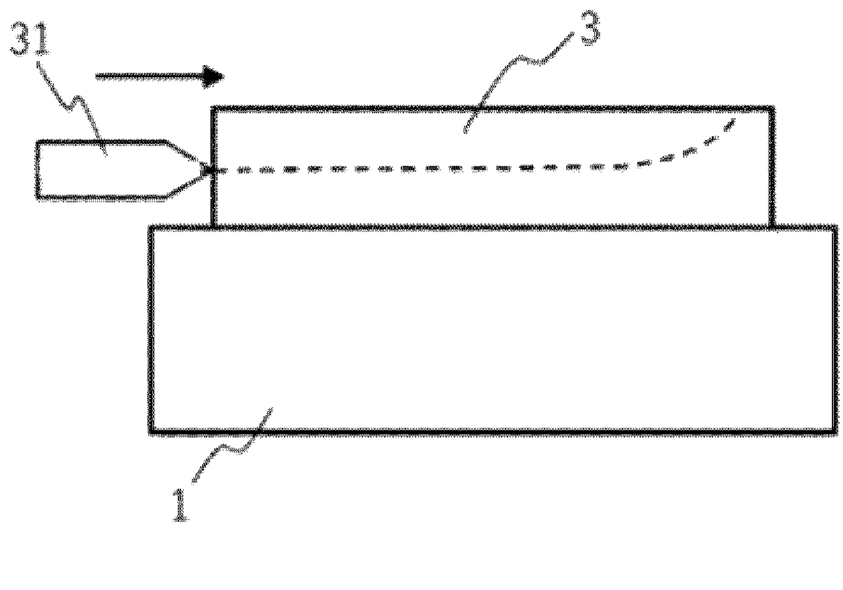

Fig. 9B

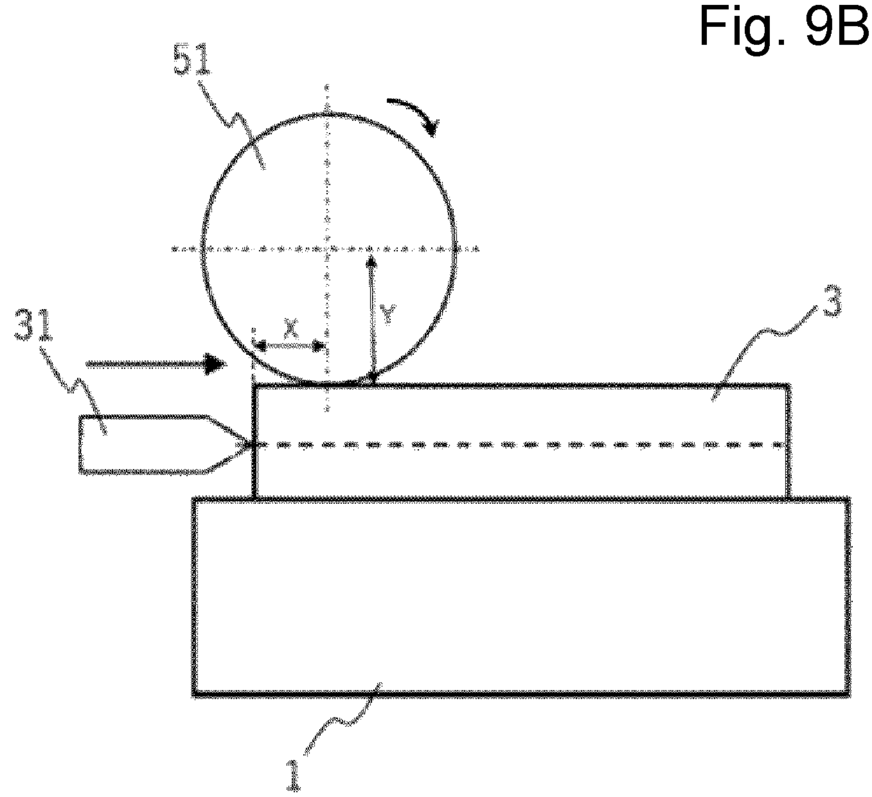


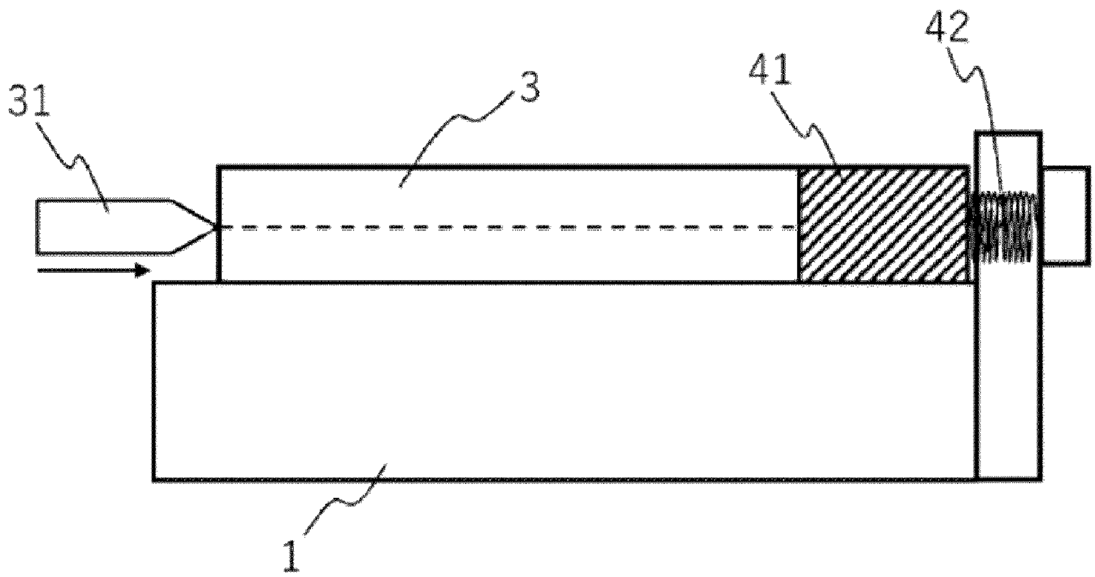


Fig. 10

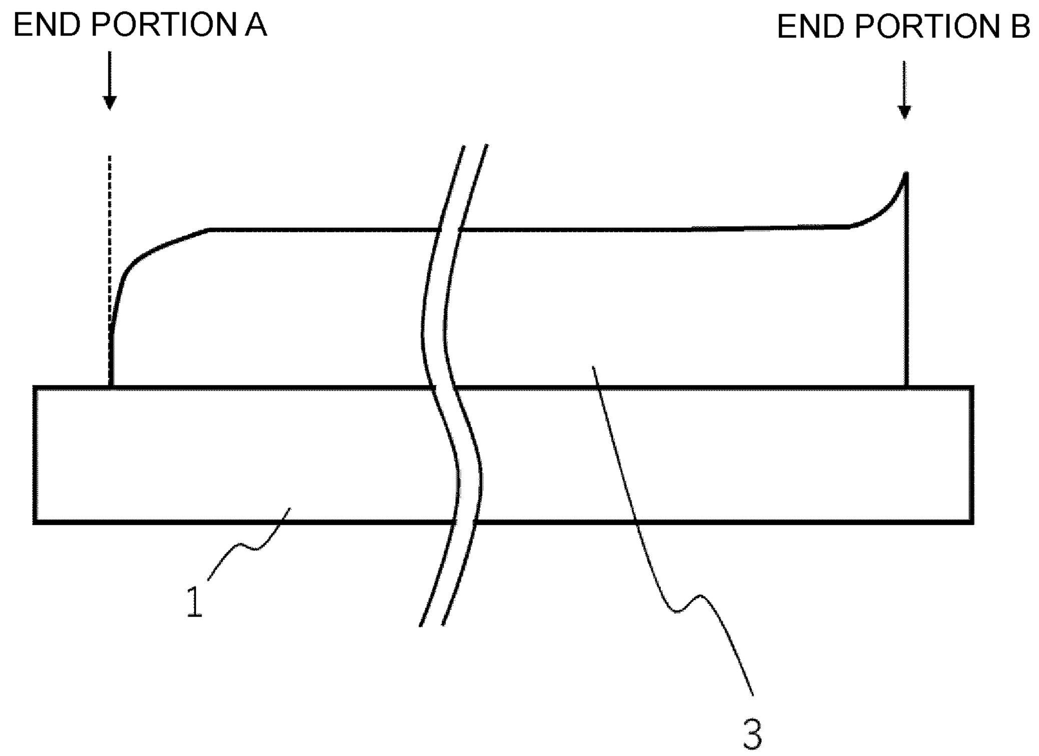
END PORTION A
END PORTION B
1
3

Fig. 11

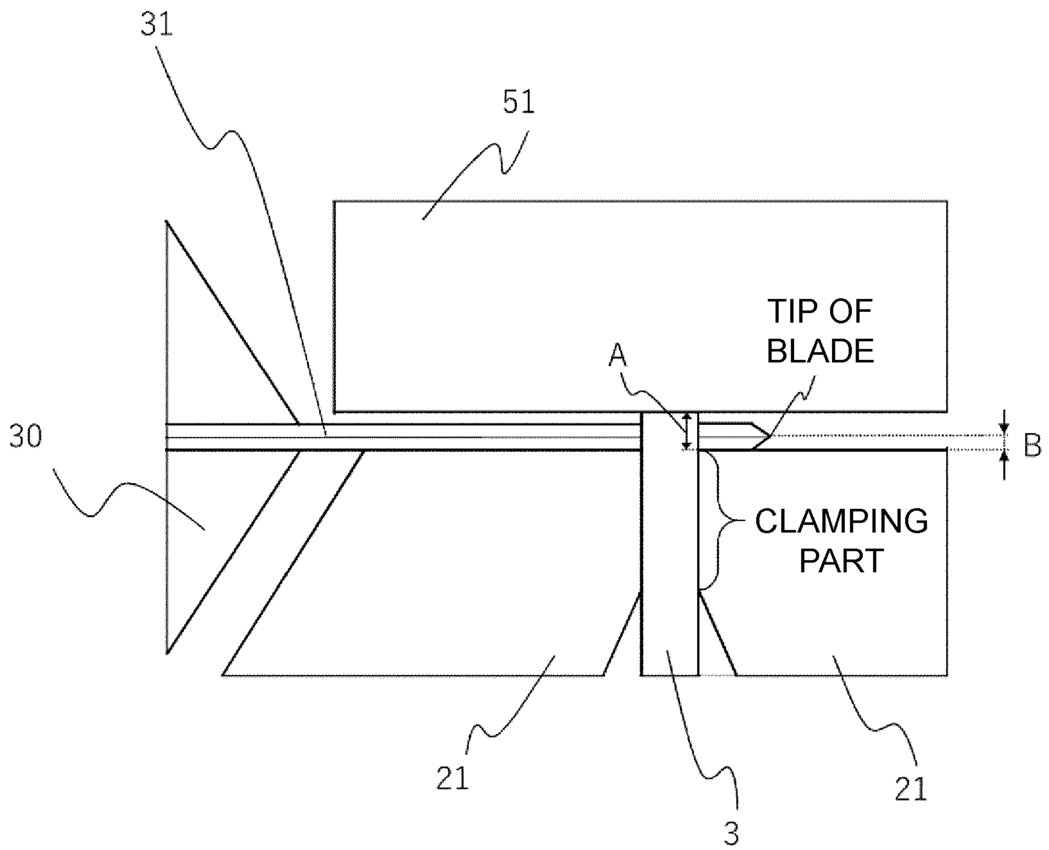
31
51
TIP OF BLADE
A
30
B
CLAMPING PART
21
3
21

Fig. 12

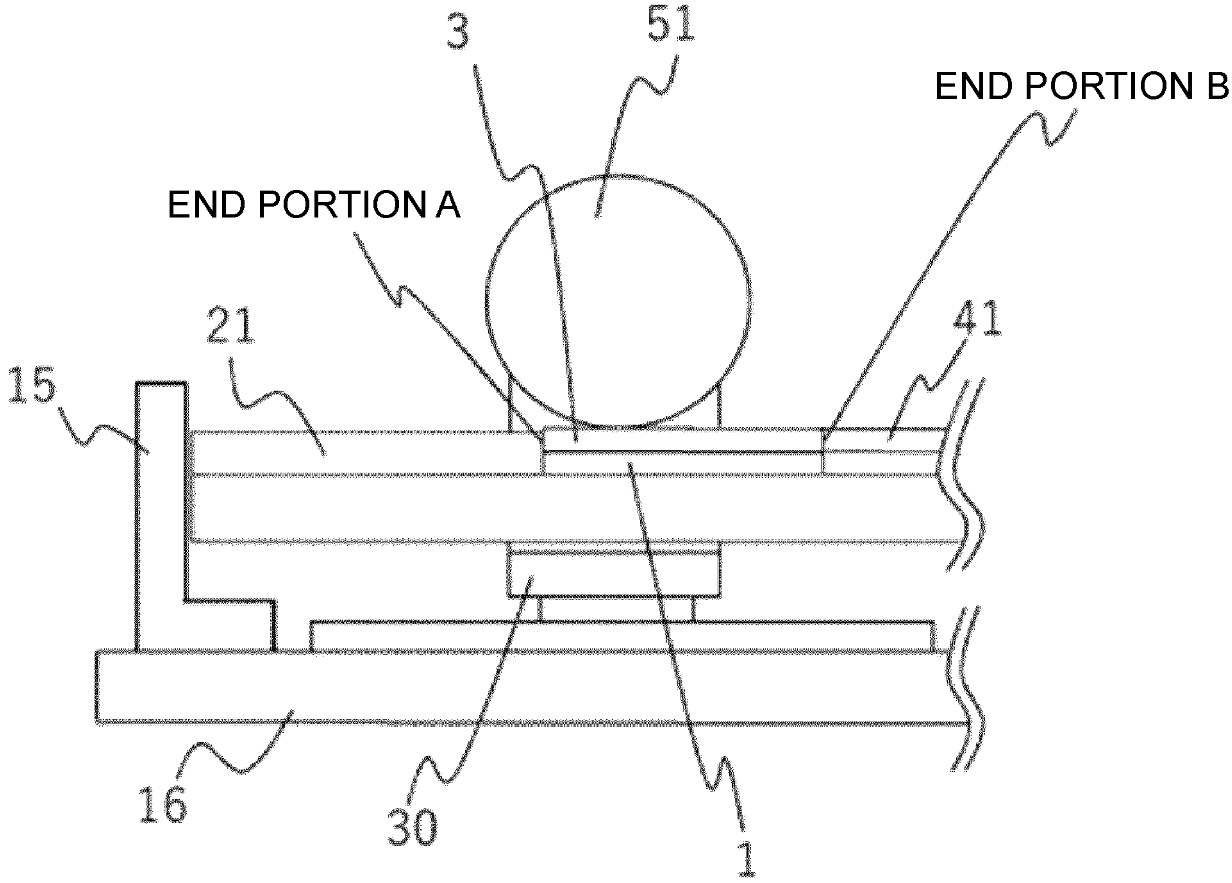


Fig. 13

Fig. 14A

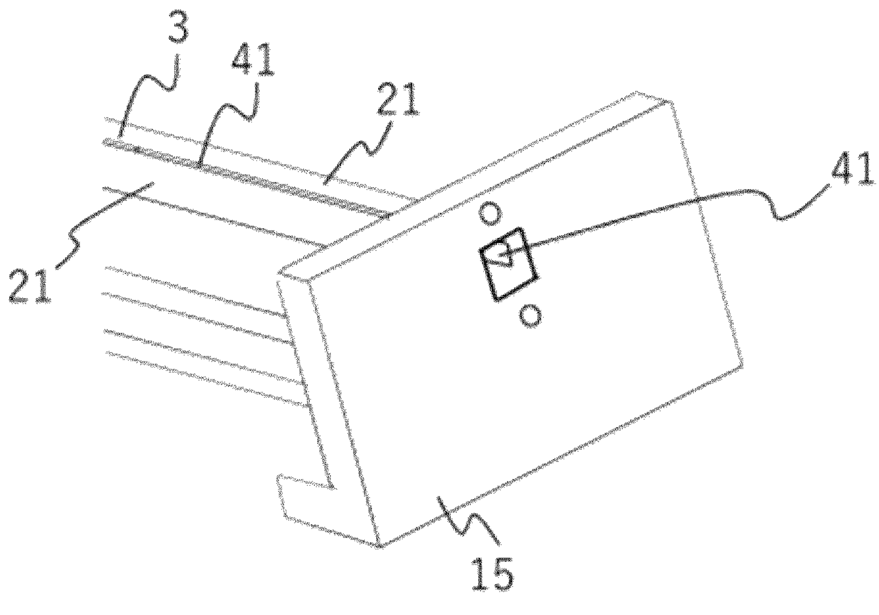

Fig. 14B

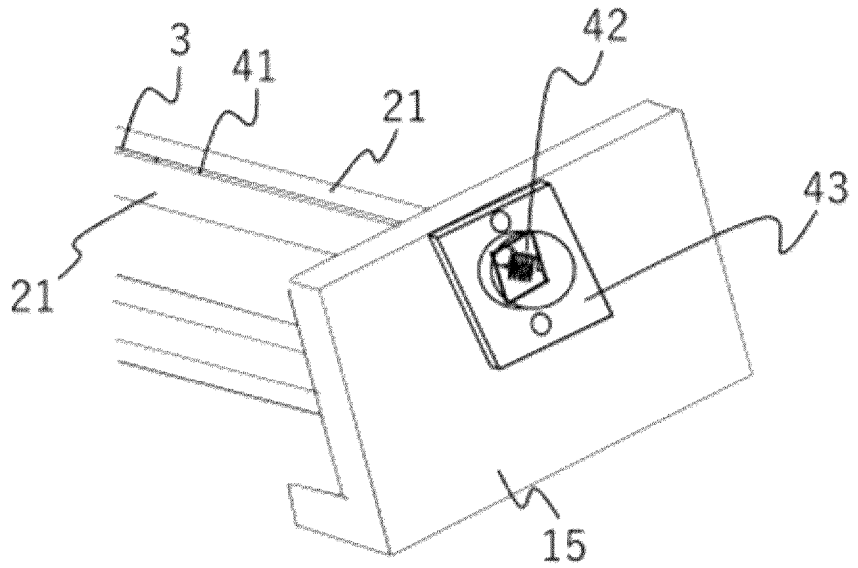


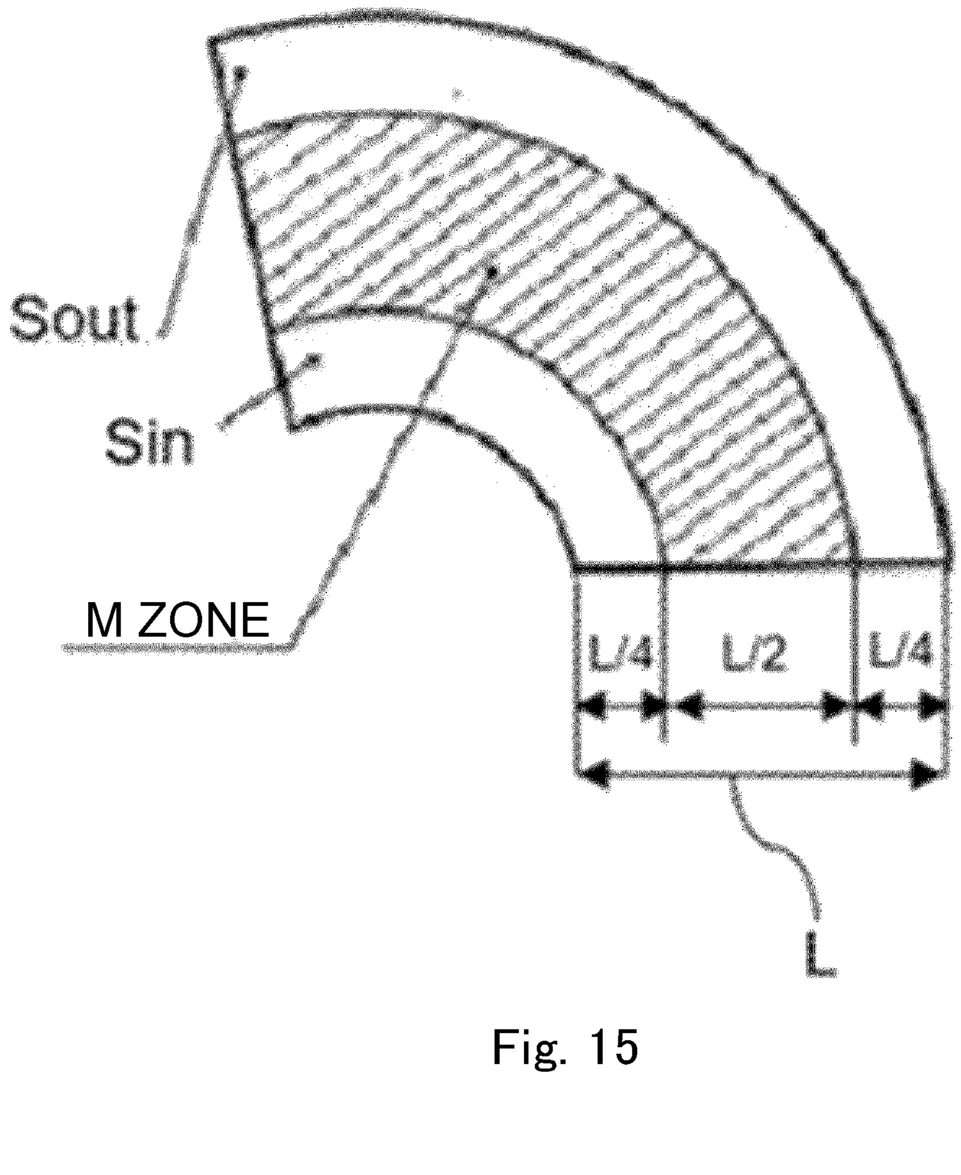


Fig. 15

Fig. 16A

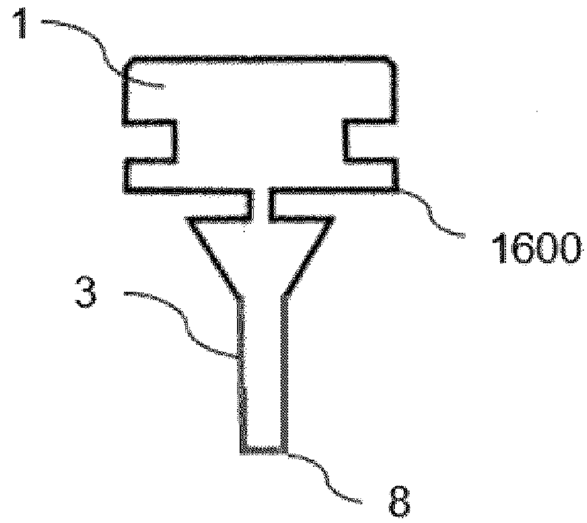


Fig. 16B

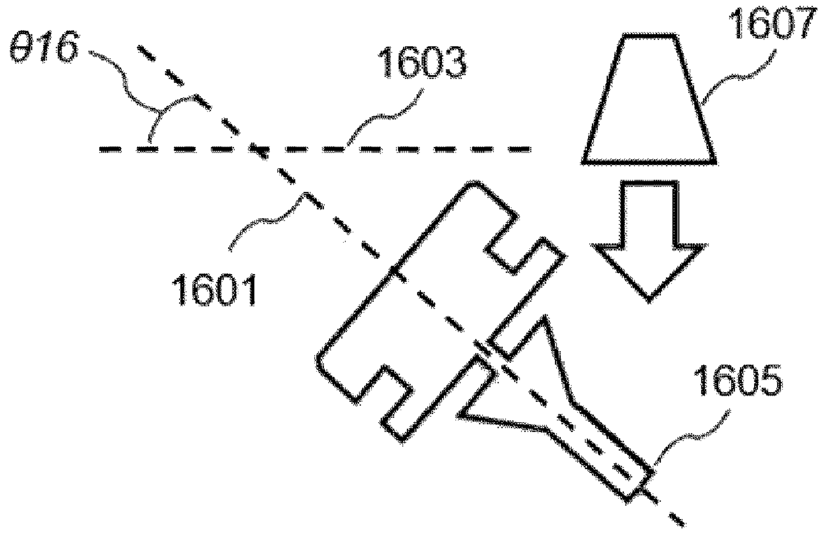

Fig. 16C

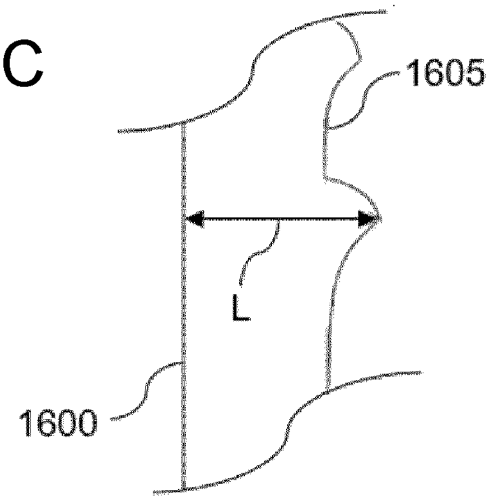


Fig. 16D

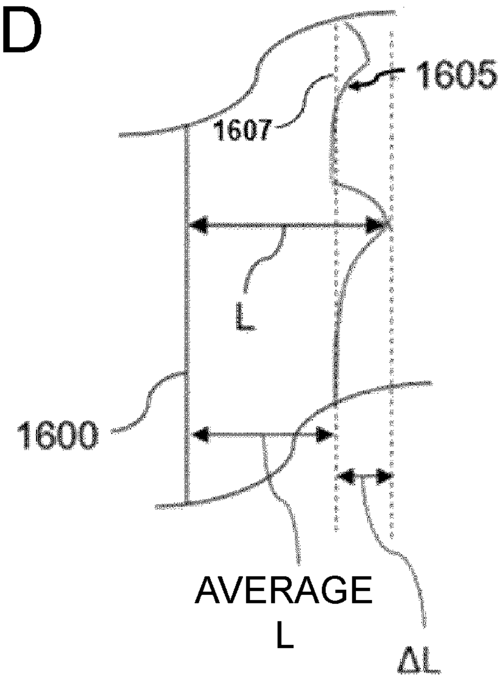

**INTERNATIONAL SEARCH REPORT**

International application No.
**PCT/JP2023/045847**

**A. CLASSIFICATION OF SUBJECT MATTER**

***B26D 1/04***(2006.01)i; ***B26D 3/00***(2006.01)i; ***B26D 7/02***(2006.01)i; ***B26D 7/08***(2006.01)i; ***B60S 1/38***(2006.01)i; ***C08C 4/00***(2006.01)i; ***C08G 18/32***(2006.01)i; ***C08G 18/42***(2006.01)i; ***C08G 18/76***(2006.01)i
FI: B26D1/04 Z; B26D3/00 601E; B26D7/08 D; B26D7/02 E; C08C4/00; C08G18/76 057; C08G18/42; C08G18/32 003; B60S1/38 Z

According to International Patent Classification (IPC) or to both national classification and IPC

**B. FIELDS SEARCHED**

Minimum documentation searched (classification system followed by classification symbols)

B26D1/04; B26D3/00; B26D7/02; B26D7/08; B60S1/38; C08C4/00; C08G18/32; C08G18/42; C08G18/76

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 06-344253 A (MURAYAMA, Katsuhiko) 20 December 1994 (1994-12-20) entire text, all drawings | 1-17 |
| A | JP 2007-160493 A (KITA, Kazuo) 28 June 2007 (2007-06-28) entire text, all drawings | 1-17 |
| A | JP 3031726 U (AKAZAWA, Yasumasa) 03 December 1996 (1996-12-03) entire text, all drawings | 1-17 |
| A | JP 10-181539 A (TOUGEISHIYA KK) 07 July 1998 (1998-07-07) entire text, all drawings | 1-17 |
| A | KR 10-2266770 B1 (YOO, Yeong-Mo) 18 June 2021 (2021-06-18) entire text, all drawings | 1-17 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **08 March 2024** | **19 March 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

INTERNATIONAL SEARCH REPORT

International application No.
PCT/JP2023/045847

C. DOCUMENTS CONSIDERED TO BE RELEVANT

| Category* | Citation of document, with indication, where appropriate, of the relevant passages | Relevant to claim No. |
|---|---|---|
| A | CN 211761768 U (FLUOTECH (XIAMEN) NEW MATERIAL CO., LTD.) 27 October 2020 (2020-10-27)<br>entire text, all drawings | 1-17 |

Form PCT/ISA/210 (second sheet) (July 2022)

**INTERNATIONAL SEARCH REPORT**
**Information on patent family members**

International application No.
**PCT/JP2023/045847**

| Patent document cited in search report | Publication date (day/month/year) | Patent family member(s) | Publication date (day/month/year) |
|---|---|---|---|
| JP 06-344253 A | 20 December 1994 | (Family: none) | |
| JP 2007-160493 A | 28 June 2007 | (Family: none) | |
| JP 3031726 U | 03 December 1996 | (Family: none) | |
| JP 10-181539 A | 07 July 1998 | (Family: none) | |
| KR 10-2266770 B1 | 18 June 2021 | (Family: none) | |
| CN 211761768 U | 27 October 2020 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2006174980 A
- JP 2022 A
- JP 205749 A
- JP 2023207474 A